# EUROPEAN PATENT SPECIFICATION

(11) **EP 4 233 180 B1**
(45) Date of publication and mention of the grant of the patent: **09.12.2026**
(21) Application number: 20958928.2
(22) Date of filing: 26.10.2020
(51) Int. Cl.: H04L 1/00, H04L 5/00, H04B 7/0456

(54) **DEMODULATION REFERENCE SIGNAL CONFIGURATION ASSUMPTIONS FOR A CHANNEL STATE INFORMATION REFERENCE RESOURCE FOR PERIODIC CHANNEL STATE FEEDBACK REPORTING**
DEMODULATIONSREFERENZSIGNALKONFIGURATIONSANNAHMEN FÜR EINE KANALZUSTANDSINFORMATIONSREFERENZRESSOURCE FÜR PERIODISCHE KANALZUSTANDSRÜCKMELDUNG
HYPOTHÈSES DE CONFIGURATION DE SIGNAL DE RÉFÉRENCE DE DÉMODULATION POUR UNE RESSOURCE DE RÉFÉRENCE D'INFORMATIONS D'ÉTAT DE CANAL POUR UN APPORT PÉRIODIQUE DE RÉTROINFORMATIONS D'ÉTAT DE CANAL

(43) Date of publication of application: 30.08.2023
(73) Proprietor: QUALCOMM INCORPORATED, San Diego, California 92121-1714 (US)
(72) Inventor: LEVITSKY, Michael, San Diego, California 92121-1714 (US); GAAL, Peter, San Diego, California 92121-1714 (US); MANOLAKOS, Alexandros, San Diego, California 92121-1714 (US); HAO, Chenxi, San Diego, California 92121-1714 (US)
(74) Representative: Tomkins & Co
(86) International application number: PCT/CN2020/123520
(87) International publication number: WO 2022/087762

(56) References cited:
- CN-A- 111 133 686
- US-A1- 2013 273 954
- US-A1- 2019 132 037
- US-A1- 2020 280 420
- US-B2- 9 936 486
- INTERDIGITAL COMMUNICATIONS: "Downlink scheduling using slots and mini-slots", 3GPP DRAFT; R1-1700858 DOWNLINK SCHEDULING USING SLOTS AND MINI-SLOTS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Spokane, USA; 20170116 - 20170120, 16 January 2017 (2017-01-16), Mobile Competence Centre ; 650, route des Lucioles ; F-06921 Sophia-Antipolis Cedex ; France , XP051208375

## Description

### FIELD OF TECHNOLOGY

The following relates to wireless communications, including demodulation reference signal (DMRS) configuration assumptions for a channel state information (CSI) reference resource for periodic channel state feedback (CSF) reporting.

### BACKGROUND

Wireless communications systems are widely deployed to provide various types of communication content such as voice, video, packet data, messaging, broadcast, and so on. These systems may be capable of supporting communication with multiple users by sharing the available system resources (e.g., time, frequency, and power). Examples of such multiple-access systems include fourth generation (4G) systems such as Long Term Evolution (LTE) systems, LTE-Advanced (LTE-A) systems, or LTE-A Pro systems, and fifth generation (5G) systems which may be referred to as New Radio (NR) systems. These systems may employ technologies such as code division multiple access (CDMA), time division multiple access (TDMA), frequency division multiple access (FDMA), orthogonal FDMA (OFDMA), or discrete Fourier transform spread orthogonal frequency division multiplexing (DFT-S-OFDM). A wireless multiple-access communications system may include one or more base stations or one or more network access nodes, each simultaneously supporting communication for multiple communication devices, which may be otherwise known as user equipment (UE). US9936486B2 discloses a method and user equipment for reporting demodulation reference signal information and method and base station for receiving demodulation reference signal information.

### SUMMARY

The invention is defined by the appended claims. In the following, apparatus and/or methods referred to as embodiments that nevertheless do not fall within the scope of the claims should be understood as examples useful for understanding the invention. The described techniques relate to improved methods, systems, devices, and apparatuses that support adaptive demodulation reference signal (DMRS) configuration and consistent with DMRS adaptation channel state feedback (CSF) reporting, which may be enabled by corresponding assumptions for DMRS configuration for a channel state information (CSI) reference resource. Generally, the described techniques provide for a user equipment (UE) to identify a DMRS configuration for a joint DMRS and CSF report to a base station based on CSI reference resource definitions and related assumptions.

### BRIEF DESCRIPTION OF THE DRAWINGS

FIGs. 1 and 2 illustrate examples of wireless communications systems that support dynamic demodulation reference signal (DMRS) configuration assumptions for a channel state information (CSI) reference resource for periodic channel state feedback (CSF) reporting in accordance with aspects of the present disclosure.
FIG. 3 illustrates a collection of operations that support dynamic DMRS configuration assumptions for a CSI reference resource for periodic channel state feedback (CSF) reporting in accordance with aspects of the present disclosure.
FIG. 4 illustrates an example of a process flow that supports dynamic DMRS configuration assumptions for a CSI reference resource for periodic CSF reporting in accordance with aspects of the present disclosure.
FIGs. 5 and 6 show block diagrams of devices that support dynamic DMRS configuration assumptions for a CSI reference resource for periodic CSF reporting in accordance with aspects of the present disclosure.
FIG. 7 shows a block diagram of a communications manager that supports dynamic DMRS configuration assumptions for a CSI reference resource for periodic CSF reporting in accordance with aspects of the present disclosure.
FIG. 8 shows a diagram of a system including a device that supports dynamic DMRS configuration assumptions for a CSI reference resource for periodic CSF reporting in accordance with aspects of the present disclosure.
FIGs. 9 and 10 show block diagrams of devices that support dynamic DMRS configuration assumptions for a CSI reference resource for periodic CSF reporting in accordance with aspects of the present disclosure.
FIG. 11 shows a block diagram of a communications manager that supports dynamic DMRS configuration assumptions for a CSI reference resource for periodic CSF reporting in accordance with aspects of the present disclosure.
FIG. 12 shows a diagram of a system including a device that supports dynamic DMRS configuration assumptions for a CSI reference resource for periodic CSF reporting in accordance with aspects of the present disclosure.
FIGs. 13 through 16 show flowcharts illustrating methods that support dynamic DMRS configuration assumptions for a CSI reference resource for periodic CSF reporting in accordance with aspects of the present disclosure.

### DETAILED DESCRIPTION

In some cases, a user equipment (UE) may perform measurements on one or more reference signals to maintain a reliable and efficient link between wireless devices. For example, a channel state information reference signal (CSI-RS) may be used to adapt transmission parameters, while a demodulation reference signal (DMRS) may be used to determine an estimate of a data channel and to assist in the demodulation and decoding of signals received over the data channel. The UE may provide a periodic or aperiodic joint DMRS and channel state feedback (CSF) report to a base station based on performing the measurements on the one or more reference signals. For example, the UE may perform a CSF evaluation to determine one or more CSF components, such as a channel quality indicator (CQI), a pre-coding matrix indicator (PMI), a rank indicator (RI), or the like for CSF or for the joint DMRS and CSF report. In case of joint DMRS and CSF reporting, the UE may signal to the base station the selected, or preferred, DMRS configuration and the corresponding components of the CSF report that were calculated assuming the selected DMRS configuration (e.g., CSF reporting consistent with the selected DMRS configuration). To provide a higher flexibility for a network scheduler, multiple DMRS configurations and corresponding CQI components, CSF components, or both may be reported. Such signaling mechanisms may be used in the context of an adaptive DMRS framework where the DMRS parameters or configurations may change over time. In some cases, where reporting is radio resource control (RRC) configured, for example periodic reporting, there may not be a practical option for frequent report parameter reconfiguration without introducing some interruption period or high latency in the corresponding reporting or uncertainty in its interpretation during the reconfiguration period. Additionally, it may be beneficial to use a small reporting size because the DMRS configuration preference may change relatively slowly based on channel and reception conditions, and repetitive indication of the same information may cause inefficient use of channel resources. However, reporting the selected DMRS configuration, or multiple DMRS and CQI configuration bundles with a number of the selected DMRS configurations or DMRS configurations for reporting, and the associated components of the CSF report may involve high signaling overhead with limited level of informativity (e.g., because the DMRS preference may not be likely to change often), and may not be appropriate for periodic reporting.

As described herein, to follow dynamics in adaptive DMRS configuration (e.g., DMRS adaptation in time) for consistent CSF reporting and to keep a low volume of periodic report, a UE may leverage a DMRS configuration associated with a resource allocation that was recently scheduled by a base station, which may provide a suitable reference for the currently used DMRS configuration (e.g., for CSF evaluation related assumptions) indicating a recent DMRS preference by the base station. In addition to CSF reporting consistent with the representative and currently used DMRS configuration, a UE may also report to the network (e.g., the base station) a DMRS configuration preference that may change in time based on changes in channel and UE reception conditions. This technique may provide a high level of DMRS and CSF report consistency, especially in the context of adaptive DMRS, while reducing the amount of information that the UE includes in the joint CSF and DMRS report. In other words, in periodic reports, the UE may provide a minimum information volume with maximum report consistency and relevance (e.g., from the point of view of network scheduler preferences). For example, a UE may identify a DMRS configuration based on a CSI reference resource and may calculate one or more CSF components based on the identified DMRS configuration for a joint DMRS and CSF report (e.g., a CSF report consistent with the currently used DMRS configuration accompanied with an indication also of a selected, or preferred, DMRS option). As such, the DMRS configuration used for the periodic CSF report may be defined in a floating way (e.g., tied to a PDSCH allocation scheduled by the network on the CSI reference resource slot), which may allow DMRS configuration assumptions for the periodic CSF report evaluation to follow a DMRS adaptation process with a high level of consistency and without reconfigurations (e.g., which may be required for the periodic CSF report). That is, a modified approach for CQI determination in joint DMRS and CSF reporting may define a CQI based on the DMRS configuration used for the CSI reference resource. Moreover, such a technique may increase the probability of a match (or increased relevance) between the DMRS assumption underlying the provided CSF report and the instant scheduling preference by the network. Such a technique may be applicable to periodic CSF reporting or a joint periodic DMRS and CSF reporting, due to the reduced signaling overhead involved.

In some case, such as for event driven reporting, for aperiodic reporting, or both the UE may perform an extended joint DMRS and CSF reporting with multiple DMRS and CQI bundles. In some other cases, for periodic reporting, the UE may provide a minimum information volume with maximum consistency and relevancy. If the reported DMRS preference is different from the currently used DMRS configuration (e.g., if the selected DMRS and the reported CSF are not consistent), the base station may schedule an extended aperiodic joint DMRS and CSF report to receive additional extended information including consistent CQI or CSF for the previously reported in a periodic report, the selected DMRS option, or both. In some examples, DMRS preference change may not take place often.

The UE may identify a CSI reference resource slot for determining one or more parameters associated with the DMRS configuration to be assumed for CSF evaluation. In the case of periodic reporting, identifying the slot corresponding to the CSI reference resource may be based on a configured formula, which may be a function of the location of the uplink resource associated with the report, the subcarrier spacing for UL and DL, CSI report configuration, among other parameters. The identification of a valid CSI reference resource slot may be based on satisfying one or more validity criteria. For example, a valid CSI reference resource slot may be associated with a PDSCH allocation with a duration greater than a threshold number of symbols. This threshold duration validity criteria may be satisfied in addition or complementary to other (e.g., conventional) CSI reference resource slot validity criteria, such as downlink or flexible symbol configuration and UE measurement gap configuration.

Fallback options for identifying a DMRS configuration from a CSI reference resource may be defined in cases where the initially identified CSI reference resource slot does not satisfy the threshold duration validity criteria (or any other validity criteria). If the threshold duration validity criteria is not satisfied, then the UE may derive the parameters for the DMRS configuration assumptions for a CSI reference resource for periodic CSF reporting from the nearest prior and valid downlink slot (e.g., based on the previously listed validity criteria). Additionally or alternatively, the UE may use a default DMRS configuration for CSI reference resource with one or more default parameters.

As part of determining the DMRS configuration to be used as an assumption for the CSF report evaluation, the UE may identify one or more parameters associated with a definition of a DMRS configuration (e.g., time density, frequency density, power boosting). Additionally or alternatively, the UE may determine one or more parameters related to a DMRS pattern such as the number of front loaded DMRS symbols (e.g., instead of what is configured (RRC) by a higher layer parameter maxLength in DMRS-DownlinkConfig and specifying the number of DMRS symbols per DMRS location), the number of additional DMRS symbols (e.g., the number of additional DMRS positions after the front loaded DMRS configured for PDSCH allocation on CSI reference resource slot), the DMRS symbol locations relative to the first PDSCH symbol of an allocation based on DMRS configuration for PDSCH allocation on CSI reference resource slot and some assumption for PDSCH allocation duration, and the like corresponding to a DMRS configuration based on the CSI reference resource. The UE may calculate the one or more CSF components (e.g., a CQI, a PMI, or an RI) based on the determined DMRS configuration and additionally may determine the most appropriate DMRS configuration for the current channel and reception conditions and may transmit the CSF components and optionally the selected DMRS configuration indication to the base station (e.g., in the joint DMRS and CSF report or in CSF report).

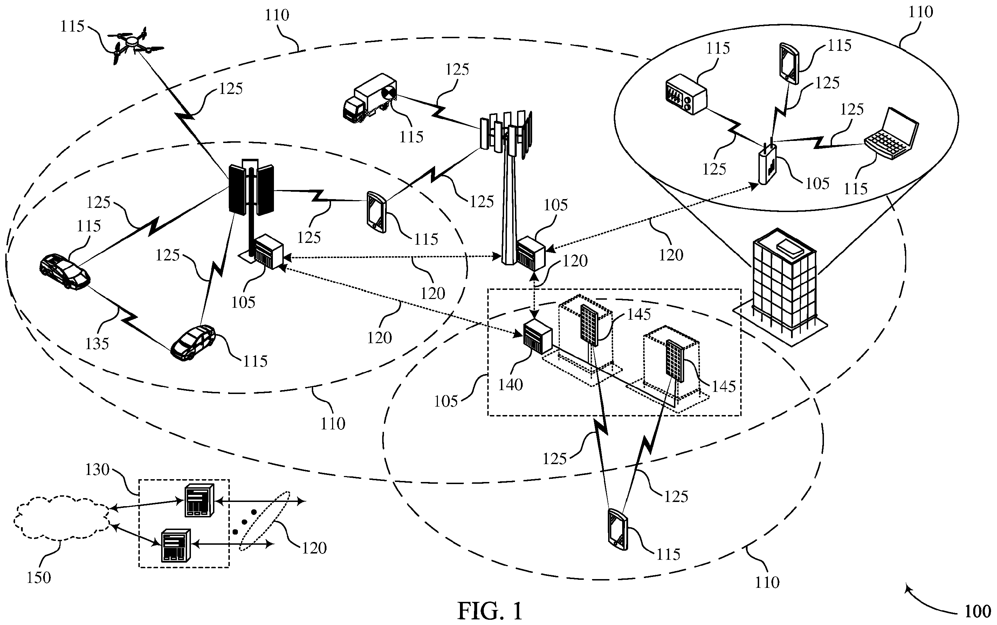

Aspects of the disclosure are initially described in the context of wireless communications systems. Aspects of the disclosure are further described in the context of a process flows that depict a collection of operations to determine DMRS configuration to be assumed for CSF evaluation based on a CSI reference resource. Aspects of the disclosure are further illustrated by and described with reference to apparatus diagrams, system diagrams, and flowcharts that relate to determination of a DMRS configuration to be assumed for CSF evaluation and based on a CSI reference resource for periodic CSF reporting
**FIG.** 1 illustrates an example of a wireless communications system 100 that supports dynamic DMRS configuration assumptions for a CSI reference resource for periodic CSF reporting in accordance with aspects of the present disclosure. The wireless communications system 100 may include one or more base stations 105, one or more UEs 115, and a core network 130. In some examples, the wireless communications system 100 may be a Long Term Evolution (LTE) network, an LTE-Advanced (LTE-A) network, an LTE-A Pro network, or a New Radio (NR) network. In some examples, the wireless communications system 100 may support enhanced broadband communications, ultra-reliable (e.g., mission critical) communications, low latency communications, communications with low-cost and low-complexity devices, or any combination thereof.

The base stations 105 may be dispersed throughout a geographic area to form the wireless communications system 100 and may be devices in different forms or having different capabilities. The base stations 105 and the UEs 115 may wirelessly communicate via one or more communication links 125. Each base station 105 may provide a coverage area 110 over which the UEs 115 and the base station 105 may establish one or more communication links 125. The coverage area 110 may be an example of a geographic area over which a base station 105 and a UE 115 may support the communication of signals according to one or more radio access technologies.

The UEs 115 may be dispersed throughout a coverage area 110 of the wireless communications system 100, and each UE 115 may be stationary, or mobile, or both at different times. The UEs 115 may be devices in different forms or having different capabilities. Some example UEs 115 are illustrated in FIG. 1. The UEs 115 described herein may be able to communicate with various types of devices, such as other UEs 115, the base stations 105, or network equipment (e.g., core network nodes, relay devices, integrated access and backhaul (IAB) nodes, or other network equipment), as shown in FIG. 1.

The base stations 105 may communicate with the core network 130, or with one another, or both. For example, the base stations 105 may interface with the core network 130 through one or more backhaul links 120 (e.g., via an S1, N2, N3, or other interface). The base stations 105 may communicate with one another over the backhaul links 120 (e.g., via an X2, Xn, or other interface) either directly (e.g., directly between base stations 105), or indirectly (e.g., via core network 130), or both. In some examples, the backhaul links 120 may be or include one or more wireless links.

One or more of the base stations 105 described herein may include or may be referred to by a person having ordinary skill in the art as a base transceiver station, a radio base station, an access point, a radio transceiver, a NodeB, an eNodeB (eNB), a next-generation NodeB or a giga-NodeB (either of which may be referred to as a gNB), a Home NodeB, a Home eNodeB, or other suitable terminology.

A UE 115 may include or may be referred to as a mobile device, a wireless device, a remote device, a handheld device, or a subscriber device, or some other suitable terminology, where the "device" may also be referred to as a unit, a station, a terminal, or a client, among other examples. A UE 115 may also include or may be referred to as a personal electronic device such as a cellular phone, a personal digital assistant (PDA), a tablet computer, a laptop computer, or a personal computer. In some examples, a UE 115 may include or be referred to as a wireless local loop (WLL) station, an Internet of Things (IoT) device, an Internet of Everything (IoE) device, or a machine type communications (MTC) device, among other examples, which may be implemented in various objects such as appliances, or vehicles, meters, among other examples.

The UEs 115 described herein may be able to communicate with various types of devices, such as other UEs 115 that may sometimes act as relays as well as the base stations 105 and the network equipment including macro eNBs or gNBs, small cell eNBs or gNBs, or relay base stations, among other examples, as shown in FIG. 1.

The UEs 115 and the base stations 105 may wirelessly communicate with one another via one or more communication links 125 over one or more carriers. The term "carrier" may refer to a set of radio frequency spectrum resources having a defined physical layer structure for supporting the communication links 125. For example, a carrier used for a communication link 125 may include a portion of a radio frequency spectrum band (e.g., a bandwidth part (BWP)) that is operated according to one or more physical layer channels for a given radio access technology (e.g., LTE, LTE-A, LTE-A Pro, NR). Each physical layer channel may carry acquisition signaling (e.g., synchronization signals, system information), control signaling that coordinates operation for the carrier, user data, or other signaling. The wireless communications system 100 may support communication with a UE 115 using carrier aggregation or multi-carrier operation. A UE 115 may be configured with multiple downlink component carriers and one or more uplink component carriers according to a carrier aggregation configuration. Carrier aggregation may be used with both frequency division duplexing (FDD) and time division duplexing (TDD) component carriers.

In some examples (e.g., in a carrier aggregation configuration), a carrier may also have acquisition signaling or control signaling that coordinates operations for other carriers. A carrier may be associated with a frequency channel (e.g., an evolved universal mobile telecommunication system terrestrial radio access (E-UTRA) absolute radio frequency channel number (EARFCN)) and may be positioned according to a channel raster for discovery by the UEs 115. A carrier may be operated in a standalone mode where initial acquisition and connection may be conducted by the UEs 115 via the carrier, or the carrier may be operated in a non-standalone mode where a connection is anchored using a different carrier (e.g., of the same or a different radio access technology).

The communication links 125 shown in the wireless communications system 100 may include uplink transmissions from a UE 115 to a base station 105, or downlink transmissions from a base station 105 to a UE 115. Carriers may carry downlink or uplink communications (e.g., in an FDD mode) or may be configured to carry downlink and uplink communications (e.g., in a TDD mode).

A carrier may be associated with a particular bandwidth of the radio frequency spectrum, and in some examples the carrier bandwidth may be referred to as a "system bandwidth" of the carrier or the wireless communications system 100. For example, the carrier bandwidth may be one of a number of determined bandwidths for carriers of a particular radio access technology (e.g., 1.4, 3, 5, 10, 15, 20, 40, or 80 megahertz (MHz)). Devices of the wireless communications system 100 (e.g., the base stations 105, the UEs 115, or both) may have hardware configurations that support communications over a particular carrier bandwidth or may be configurable to support communications over one of a set of carrier bandwidths. In some examples, the wireless communications system 100 may include base stations 105 or UEs 115 that support simultaneous communications via carriers associated with multiple carrier bandwidths. In some examples, each served UE 115 may be configured for operating over portions (e.g., a sub-band, a BWP) or all of a carrier bandwidth.

Signal waveforms transmitted over a carrier may be made up of multiple subcarriers (e.g., using multi-carrier modulation (MCM) techniques such as orthogonal frequency division multiplexing (OFDM) or discrete Fourier transform spread OFDM (DFT-S-OFDM)). In a system employing MCM techniques, a resource element may consist of one symbol period (e.g., a duration of one modulation symbol) and one subcarrier, where the symbol period and subcarrier spacing are inversely related. The number of bits carried by each resource element may depend on the modulation scheme (e.g., the order of the modulation scheme, the coding rate of the modulation scheme, or both). Thus, the more resource elements that a UE 115 receives and the higher the order of the modulation scheme, the higher the data rate may be for the UE 115. A wireless communications resource may refer to a combination of a radio frequency spectrum resource, a time resource, and a spatial resource (e.g., spatial layers or beams), and the use of multiple spatial layers may further increase the data rate or data integrity for communications with a UE 115.

One or more numerologies for a carrier may be supported, where a numerology may include a subcarrier spacing (Δ*f*) and a cyclic prefix. A carrier may be divided into one or more BWPs having the same or different numerologies. In some examples, a UE 115 may be configured with multiple BWPs. In some examples, a single BWP for a carrier may be active at a given time and communications for the UE 115 may be restricted to one or more active BWPs.

The time intervals for the base stations 105 or the UEs 115 may be expressed in multiples of a basic time unit which may, for example, refer to a sampling period of *Tₛ =* 1/(Δ*fₘₐₓ* · *N_{f}*) seconds, where Δ*fₘₐₓ* may represent the maximum supported subcarrier spacing, and *N_{f}* may represent the maximum supported discrete Fourier transform (DFT) size. Time intervals of a communications resource may be organized according to radio frames each having a specified duration (e.g., 10 milliseconds (ms)). Each radio frame may be identified by a system frame number (SFN) (e.g., ranging from 0 to 1023).

Each frame may include multiple consecutively numbered subframes or slots, and each subframe or slot may have the same duration. In some examples, a frame may be divided (e.g., in the time domain) into subframes, and each subframe may be further divided into a number of slots. Alternatively, each frame may include a variable number of slots, and the number of slots may depend on subcarrier spacing. Each slot may include a number of symbol periods (e.g., depending on the length of the cyclic prefix prepended to each symbol period). In some wireless communications systems 100, a slot may further be divided into multiple mini-slots containing one or more symbols. Excluding the cyclic prefix, each symbol period may contain one or more (e.g., *N_{f}*) sampling periods. The duration of a symbol period may depend on the subcarrier spacing or frequency band of operation.

A subframe, a slot, a mini-slot, or a symbol may be the smallest scheduling unit (e.g., in the time domain) of the wireless communications system 100 and may be referred to as a transmission time interval (TTI). In some examples, the TTI duration (e.g., the number of symbol periods in a TTI) may be variable. Additionally or alternatively, the smallest scheduling unit of the wireless communications system 100 may be dynamically selected (e.g., in bursts of shortened TTIs (sTTIs)).

Physical channels may be multiplexed on a carrier according to various techniques. A physical control channel and a physical data channel may be multiplexed on a downlink carrier, for example, using one or more of time division multiplexing (TDM) techniques, frequency division multiplexing (FDM) techniques, or hybrid TDM-FDM techniques. A control region (e.g., a control resource set (CORESET)) for a physical control channel may be defined by a number of symbol periods and may extend across the system bandwidth or a subset of the system bandwidth of the carrier. One or more control regions (e.g., CORESETs) may be configured for a set of the UEs 115. For example, one or more of the UEs 115 may monitor or search control regions for control information according to one or more search space sets, and each search space set may include one or multiple control channel candidates in one or more aggregation levels arranged in a cascaded manner. An aggregation level for a control channel candidate may refer to a number of control channel resources (e.g., control channel elements (CCEs)) associated with encoded information for a control information format having a given payload size. Search space sets may include common search space sets configured for sending control information to multiple UEs 115 and UE-specific search space sets for sending control information to a specific UE 115.

Each base station 105 may provide communication coverage via one or more cells, for example a macro cell, a small cell, a hot spot, or other types of cells, or any combination thereof. The term "cell" may refer to a logical communication entity used for communication with a base station 105 (e.g., over a carrier) and may be associated with an identifier for distinguishing neighboring cells (e.g., a physical cell identifier (PCID), a virtual cell identifier (VCID), or others). In some examples, a cell may also refer to a geographic coverage area 110 or a portion of a geographic coverage area 110 (e.g., a sector) over which the logical communication entity operates. Such cells may range from smaller areas (e.g., a structure, a subset of structure) to larger areas depending on various factors such as the capabilities of the base station 105. For example, a cell may be or include a building, a subset of a building, or exterior spaces between or overlapping with geographic coverage areas 110, among other examples.

A macro cell generally covers a relatively large geographic area (e.g., several kilometers in radius) and may allow unrestricted access by the UEs 115 with service subscriptions with the network provider supporting the macro cell. A small cell may be associated with a lower-powered base station 105, as compared with a macro cell, and a small cell may operate in the same or different (e.g., licensed, unlicensed) frequency bands as macro cells. Small cells may provide unrestricted access to the UEs 115 with service subscriptions with the network provider or may provide restricted access to the UEs 115 having an association with the small cell (e.g., the UEs 115 in a closed subscriber group (CSG), the UEs 115 associated with users in a home or office). A base station 105 may support one or multiple cells and may also support communications over the one or more cells using one or multiple component carriers.

In some examples, a carrier may support multiple cells, and different cells may be configured according to different protocol types (e.g., MTC, narrowband IoT (NB-IoT), enhanced mobile broadband (eMBB)) that may provide access for different types of devices.

In some examples, a base station 105 may be movable and therefore provide communication coverage for a moving geographic coverage area 110. In some examples, different geographic coverage areas 110 associated with different technologies may overlap, but the different geographic coverage areas 110 may be supported by the same base station 105. In other examples, the overlapping geographic coverage areas 110 associated with different technologies may be supported by different base stations 105. The wireless communications system 100 may include, for example, a heterogeneous network in which different types of the base stations 105 provide coverage for various geographic coverage areas 110 using the same or different radio access technologies.

The wireless communications system 100 may support synchronous or asynchronous operation. For synchronous operation, the base stations 105 may have similar frame timings, and transmissions from different base stations 105 may be approximately aligned in time. For asynchronous operation, the base stations 105 may have different frame timings, and transmissions from different base stations 105 may, in some examples, not be aligned in time. The techniques described herein may be used for either synchronous or asynchronous operations.

Some UEs 115, such as MTC or IoT devices, may be low cost or low complexity devices and may provide for automated communication between machines (e.g., via Machine-to-Machine (M2M) communication). M2M communication or MTC may refer to data communication technologies that allow devices to communicate with one another or a base station 105 without human intervention. In some examples, M2M communication or MTC may include communications from devices that integrate sensors or meters to measure or capture information and relay such information to a central server or application program that makes use of the information or presents the information to humans interacting with the application program. Some UEs 115 may be designed to collect information or enable automated behavior of machines or other devices. Examples of applications for MTC devices include smart metering, inventory monitoring, water level monitoring, equipment monitoring, healthcare monitoring, wildlife monitoring, weather and geological event monitoring, fleet management and tracking, remote security sensing, physical access control, and transaction-based business charging.

Some UEs 115 may be configured to employ operating modes that reduce power consumption, such as half-duplex communications (e.g., a mode that supports one-way communication via transmission or reception, but not transmission and reception simultaneously). In some examples, half-duplex communications may be performed at a reduced peak rate. Other power conservation techniques for the UEs 115 include entering a power saving deep sleep mode when not engaging in active communications, operating over a limited bandwidth (e.g., according to narrowband communications), or a combination of these techniques. For example, some UEs 115 may be configured for operation using a narrowband protocol type that is associated with a defined portion or range (e.g., set of subcarriers or resource blocks (RBs)) within a carrier, within a guard-band of a carrier, or outside of a carrier.

The wireless communications system 100 may be configured to support ultra-reliable communications or low-latency communications, or various combinations thereof. For example, the wireless communications system 100 may be configured to support ultra-reliable low-latency communications (URLLC) or mission critical communications. The UEs 115 may be designed to support ultra-reliable, low-latency, or critical functions (e.g., mission critical functions). Ultra-reliable communications may include private communication or group communication and may be supported by one or more mission critical services such as mission critical push-to-talk (MCPTT), mission critical video (MCVideo), or mission critical data (MCData). Support for mission critical functions may include prioritization of services, and mission critical services may be used for public safety or general commercial applications. The terms ultra-reliable, low-latency, mission critical, and ultra-reliable low-latency may be used interchangeably herein.

In some examples, a UE 115 may also be able to communicate directly with other UEs 115 over a device-to-device (D2D) communication link 135 (e.g., using a peer-to-peer (P2P) or D2D protocol). One or more UEs 115 utilizing D2D communications may be within the geographic coverage area 110 of a base station 105. Other UEs 115 in such a group may be outside the geographic coverage area 110 of a base station 105 or be otherwise unable to receive transmissions from a base station 105. In some examples, groups of the UEs 115 communicating via D2D communications may utilize a one-to-many (1:M) system in which each UE 115 transmits to every other UE 115 in the group. In some examples, a base station 105 facilitates the scheduling of resources for D2D communications. In other cases, D2D communications are carried out between the UEs 115 without the involvement of a base station 105.

In some systems, the D2D communication link 135 may be an example of a communication channel, such as a sidelink communication channel, between vehicles (e.g., UEs 115). In some examples, vehicles may communicate using vehicle-to-everything (V2X) communications, vehicle-to-vehicle (V2V) communications, or some combination of these. A vehicle may signal information related to traffic conditions, signal scheduling, weather, safety, emergencies, or any other information relevant to a V2X system. In some examples, vehicles in a V2X system may communicate with roadside infrastructure, such as roadside units, or with the network via one or more network nodes (e.g., base stations 105) using vehicle-to-network (V2N) communications, or with both.

The core network 130 may provide user authentication, access authorization, tracking, Internet Protocol (IP) connectivity, and other access, routing, or mobility functions. The core network 130 may be an evolved packet core (EPC) or 5G core (5GC), which may include at least one control plane entity that manages access and mobility (e.g., a mobility management entity (MME), an access and mobility management function (AMF)) and at least one user plane entity that routes packets or interconnects to external networks (e.g., a serving gateway (S-GW), a Packet Data Network (PDN) gateway (P-GW), or a user plane function (UPF)). The control plane entity may manage non-access stratum (NAS) functions such as mobility, authentication, and bearer management for the UEs 115 served by the base stations 105 associated with the core network 130. User IP packets may be transferred through the user plane entity, which may provide IP address allocation as well as other functions. The user plane entity may be connected to the network operators IP services 150. The network operators IP services 150 may include access to the Internet, Intranet(s), an IP Multimedia Subsystem (IMS), or a Packet-Switched Streaming Service.

Some of the network devices, such as a base station 105, may include subcomponents such as an access network entity 140, which may be an example of an access node controller (ANC). Each access network entity 140 may communicate with the UEs 115 through one or more other access network transmission entities 145, which may be referred to as radio heads, smart radio heads, or transmission/reception points (TRPs). Each access network transmission entity 145 may include one or more antenna panels. In some configurations, various functions of each access network entity 140 or base station 105 may be distributed across various network devices (e.g., radio heads and ANCs) or consolidated into a single network device (e.g., a base station 105).

The wireless communications system 100 may operate using one or more frequency bands, typically in the range of 300 megahertz (MHz) to 300 gigahertz (GHz). Generally, the region from 300 MHz to 3 GHz is known as the ultra-high frequency (UHF) region or decimeter band because the wavelengths range from approximately one decimeter to one meter in length. The UHF waves may be blocked or redirected by buildings and environmental features, but the waves may penetrate structures sufficiently for a macro cell to provide service to the UEs 115 located indoors. The transmission of UHF waves may be associated with smaller antennas and shorter ranges (e.g., less than 100 kilometers) compared to transmission using the smaller frequencies and longer waves of the high frequency (HF) or very high frequency (VHF) portion of the spectrum below 300 MHz.

The wireless communications system 100 may also operate in a super high frequency (SHF) region using frequency bands from 3 GHz to 30 GHz, also known as the centimeter band, or in an extremely high frequency (EHF) region of the spectrum (e.g., from 30 GHz to 300 GHz), also known as the millimeter band. In some examples, the wireless communications system 100 may support millimeter wave (mmW) communications between the UEs 115 and the base stations 105, and EHF antennas of the respective devices may be smaller and more closely spaced than UHF antennas. In some examples, this may facilitate use of antenna arrays within a device. The propagation of EHF transmissions, however, may be subject to even greater atmospheric attenuation and shorter range than SHF or UHF transmissions. The techniques disclosed herein may be employed across transmissions that use one or more different frequency regions, and designated use of bands across these frequency regions may differ by country or regulating body.

The wireless communications system 100 may utilize both licensed and unlicensed radio frequency spectrum bands. For example, the wireless communications system 100 may employ License Assisted Access (LAA), LTE-Unlicensed (LTE-U) radio access technology, or NR technology in an unlicensed band such as the 5 GHz industrial, scientific, and medical (ISM) band. When operating in unlicensed radio frequency spectrum bands, devices such as the base stations 105 and the UEs 115 may employ carrier sensing for collision detection and avoidance. In some examples, operations in unlicensed bands may be based on a carrier aggregation configuration in conjunction with component carriers operating in a licensed band (e.g., LAA). Operations in unlicensed spectrum may include downlink transmissions, uplink transmissions, P2P transmissions, or D2D transmissions, among other examples.

A base station 105 or a UE 115 may be equipped with multiple antennas, which may be used to employ techniques such as transmit diversity, receive diversity, multiple-input multiple-output (MIMO) communications, or beamforming. The antennas of a base station 105 or a UE 115 may be located within one or more antenna arrays or antenna panels, which may support MIMO operations or transmit or receive beamforming. For example, one or more base station antennas or antenna arrays may be co-located at an antenna assembly, such as an antenna tower. In some examples, antennas or antenna arrays associated with a base station 105 may be located in diverse geographic locations. A base station 105 may have an antenna array with a number of rows and columns of antenna ports that the base station 105 may use to support beamforming of communications with a UE 115. Likewise, a UE 115 may have one or more antenna arrays that may support various MIMO or beamforming operations. Additionally or alternatively, an antenna panel may support radio frequency beamforming for a signal transmitted via an antenna port.

The base stations 105 or the UEs 115 may use MIMO communications to exploit multipath signal propagation and increase the spectral efficiency by transmitting or receiving multiple signals via different spatial layers. Such techniques may be referred to as spatial multiplexing. The multiple signals may, for example, be transmitted by the transmitting device via different antennas or different combinations of antennas. Likewise, the multiple signals may be received by the receiving device via different antennas or different combinations of antennas. Each of the multiple signals may be referred to as a separate spatial stream and may carry bits associated with the same data stream (e.g., the same codeword) or different data streams (e.g., different codewords). Different spatial layers may be associated with different antenna ports used for channel measurement and reporting. MIMO techniques include single-user MIMO (SU-MIMO), where multiple spatial layers are transmitted to the same receiving device, and multiple-user MIMO (MU-MIMO), where multiple spatial layers are transmitted to multiple devices.

Beamforming, which may also be referred to as spatial filtering, directional transmission, or directional reception, is a signal processing technique that may be used at a transmitting device or a receiving device (e.g., a base station 105, a UE 115) to shape or steer an antenna beam (e.g., a transmit beam, a receive beam) along a spatial path between the transmitting device and the receiving device. Beamforming may be achieved by combining the signals communicated via antenna elements of an antenna array such that some signals propagating at particular orientations with respect to an antenna array experience constructive interference while others experience destructive interference. The adjustment of signals communicated via the antenna elements may include a transmitting device or a receiving device applying amplitude offsets, phase offsets, or both to signals carried via the antenna elements associated with the device. The adjustments associated with each of the antenna elements may be defined by a beamforming weight set associated with a particular orientation (e.g., with respect to the antenna array of the transmitting device or receiving device, or with respect to some other orientation).

A base station 105 or a UE 115 may use beam sweeping techniques as part of beam forming operations. For example, a base station 105 may use multiple antennas or antenna arrays (e.g., antenna panels) to conduct beamforming operations for directional communications with a UE 115. Some signals (e.g., synchronization signals, reference signals, beam selection signals, or other control signals) may be transmitted by a base station 105 multiple times in different directions. For example, the base station 105 may transmit a signal according to different beamforming weight sets associated with different directions of transmission. Transmissions in different beam directions may be used to identify (e.g., by a transmitting device, such as a base station 105, or by a receiving device, such as a UE 115) a beam direction for later transmission or reception by the base station 105.

Some signals, such as data signals associated with a particular receiving device, may be transmitted by a base station 105 in a single beam direction (e.g., a direction associated with the receiving device, such as a UE 115). In some examples, the beam direction associated with transmissions along a single beam direction may be determined based on a signal that was transmitted in one or more beam directions. For example, a UE 115 may receive one or more of the signals transmitted by the base station 105 in different directions and may report to the base station 105 an indication of the signal that the UE 115 received with a highest signal quality or an otherwise acceptable signal quality.

In some examples, transmissions by a device (e.g., by a base station 105 or a UE 115) may be performed using multiple beam directions, and the device may use a combination of digital precoding or radio frequency beamforming to generate a combined beam for transmission (e.g., from a base station 105 to a UE 115). The UE 115 may report feedback that indicates precoding weights for one or more beam directions, and the feedback may correspond to a configured number of beams across a system bandwidth or one or more sub-bands. The base station 105 may transmit a reference signal (e.g., a cell-specific reference signal (CRS), a channel state information reference signal (CSI-RS)), which may be precoded or unprecoded. The UE 115 may provide feedback for beam selection, which may be a precoding matrix indicator (PMI) or codebook-based feedback (e.g., a multi-panel type codebook, a linear combination type codebook, a port selection type codebook). Although these techniques are described with reference to signals transmitted in one or more directions by a base station 105, a UE 115 may employ similar techniques for transmitting signals multiple times in different directions (e.g., for identifying a beam direction for subsequent transmission or reception by the UE 115) or for transmitting a signal in a single direction (e.g., for transmitting data to a receiving device).

A receiving device (e.g., a UE 115) may try multiple receive configurations (e.g., directional listening) when receiving various signals from the base station 105, such as synchronization signals, reference signals, beam selection signals, or other control signals. For example, a receiving device may try multiple receive directions by receiving via different antenna subarrays, by processing received signals according to different antenna subarrays, by receiving according to different receive beamforming weight sets (e.g., different directional listening weight sets) applied to signals received at multiple antenna elements of an antenna array, or by processing received signals according to different receive beamforming weight sets applied to signals received at multiple antenna elements of an antenna array, any of which may be referred to as "listening" according to different receive configurations or receive directions. In some examples, a receiving device may use a single receive configuration to receive along a single beam direction (e.g., when receiving a data signal). The single receive configuration may be aligned in a beam direction determined based on listening according to different receive configuration directions (e.g., a beam direction determined to have a highest signal strength, highest signal-to-noise ratio (SNR), or otherwise acceptable signal quality based on listening according to multiple beam directions).

The wireless communications system 100 may be a packet-based network that operates according to a layered protocol stack. In the user plane, communications at the bearer or Packet Data Convergence Protocol (PDCP) layer may be IP-based. A Radio Link Control (RLC) layer may perform packet segmentation and reassembly to communicate over logical channels. A Medium Access Control (MAC) layer may perform priority handling and multiplexing of logical channels into transport channels. The MAC layer may also use error detection techniques, error correction techniques, or both to support retransmissions at the MAC layer to improve link efficiency. In the control plane, the Radio Resource Control (RRC) protocol layer may provide establishment, configuration, and maintenance of an RRC connection between a UE 115 and a base station 105 or a core network 130 supporting radio bearers for user plane data. At the physical layer, transport channels may be mapped to physical channels.

The UEs 115 and the base stations 105 may support retransmissions of data to increase the likelihood that data is received successfully. Hybrid automatic repeat request (HARQ) feedback is one technique for increasing the likelihood that data is received correctly over a communication link 125. HARQ may include a combination of error detection (e.g., using a cyclic redundancy check (CRC)), forward error correction (FEC), and retransmission (e.g., automatic repeat request (ARQ)). HARQ may improve throughput at the MAC layer in poor radio conditions (e.g., low signal-to-noise conditions). In some examples, a device may support same-slot HARQ feedback, where the device may provide HARQ feedback in a specific slot for data received in a previous symbol in the slot. In other cases, the device may provide HARQ feedback in a subsequent slot, or according to some other time interval.

A wireless communications system 100 may support the transmission of reference signals to increase an efficiency and a reliability of communications between wireless devices (e.g., a base station 105 and a UE 115). Reference signals may be transmitted from a base station 105 to a UE 115, and vice versa. Reference signals transmitted to a UE 115 may be referred to as downlink reference signal and reference signals transmitted to a base station 105 may be referred to as uplink reference signals. Reference signals may be used by the wireless devices to determine characteristics of a channel. The characteristics of a channel may also be referred to as a channel estimate or channel conditions or channel metrics. Reference signals may include CSI-RS, downlink DMRS, uplink DMRS, sounding reference signal (SRS), tracking reference signal (TRS), and phase tracking reference signal (PTRS).

A CSI-RS transmission may be used by a UE 115 to determine a channel estimate that is used to assist in link adaptation-e.g., by assisting in the adaptation of transmission parameters. The channel estimate may be used to determine a signal quality ratio (e.g., post-processing signal-to-noise ratio (SNR) or post-processing signal-to-interference-plus-noise ratio (SINR)) for the channel, a delay spread (*τᵣₘₛ*) for the channel or a classification of the channel (or channel type), a precoding matrix to use for communications over the channel, a rank (or number of spatial layers) to use for communications over the channel, or any combination thereof. A downlink DMRS transmission may also be used by a UE 115 to determine a data channel estimate that may be used to demodulate and decode transmissions received in a data channel. The channel estimate determined using the CSI-RS transmission may be different than the channel estimate determined using the downlink DMRS transmission. Thus, a downlink DMRS may be transmitted using resources that are associated with data resources allocated to a UE 115. A TRS transmission may be used by a UE 115 for synchronization loops and for determination of mid and long-term characteristics of a channel, such as a Doppler frequency, delay spread, and power delay profile.

An uplink DMRS may be used by a base station 105 to determine a channel estimate for an uplink channel between the base station and a UE 115 that transmitted the uplink DMRS (e.g., so the base station 105 can perform coherent demodulation of the physical uplink control channel (PUCCH) and the physical uplink shared channel (PUSCH)). For example, each scheduled PUCCH and PUSCH may have its own DMRS, which may assist the base station 105 with demodulation and decoding. The uplink SRS may be used by a base station 105 for uplink link adaption, uplink transmission parameter selection, and uplink measurements, among other uses. In some examples, an uplink SRS may be used by a base station 105 to determine the uplink channel quality over a wide bandwidth so that the base station 105 can perform frequency-selective scheduling for the UE 115 that transmitted the uplink SRS.

A reference signal may be transmitted over communication resources in accordance with a reference signal configuration. A reference signal configuration may indicate which resource elements are allocated to a reference signal transmission-a resource element allocated to a transmission of a reference signal may be referred to as a pilot resource element. A group of resource elements (e.g., contiguous resource elements) within a symbol period allocated to a transmission of a reference signal may be referred to as a pilot symbol. In some cases, a reference signal configuration indicates a temporal spacing (*Dₜ*) between resource elements allocated to a reference signal; a frequency spacing (*D_{f}*) between resource elements allocated to a reference signal; and a power boosting parameter (*ρₚ*) that indicates a power for transmitting the reference signal resource element relative to a power for transmitting a data resource element. Different reference signal configurations may be associated with different combinations of temporal spacing, frequency spacing, and power boosting-e.g., a first reference signal configuration may be associated with a first temporal spacing, a first frequency spacing, and a first power boosting, a second reference signal configuration may be associated with the first temporal spacing, the first frequency spacing, and a second power boosting, and so on.

A base station 105 may determine configurations for the different reference signals. In some cases, the base station 105 may determine a downlink or uplink DMRS configuration for a UE 115 by selecting the DMRS configuration from a set of DMRS configurations supported by a UE. The base station 105 may then signal the selected DMRS configuration to a UE 115 using dynamic control signaling, such as DCI based signaling of the selected DMRS configuration, MAC-CE based activation of the selected DMRS configuration, RRC based reconfiguration, or any combination. For example, the UE 115 may use a MAC-CE based activation for a set of the selected DMRS options with a complimentary DCI based selection of one of the activated options per allocation.

A UE 115 may use demodulation reference signals to determine a signal quality ratio for a data channel. In some cases, a UE 115 may use a minimum mean squared error (MMSE) equalization or linear MMSE (LMMSE) filtering approach to obtain post-processing SINR for a channel. An MMSE approach may include estimating post-processing SINR for each resource element k of each involved spatial stream l. For example, for each spatial stream *l* and resource element *k* included in a communication resource, post-processing SINR (*γₗ*(*k*)*_{DMRS}*) obtained using DMRS based channel estimation and LMMSE based equalization may be formulated based on Equation 1: ${γ}_{l} {\left(k\right)}_{DMRS} = \frac{1}{\left({σ}_{n}^{2}+{σ}_{ICI}^{2}+{σ}_{e}^{2}\right) ⋅ {\left[{\left({\hat{H}}_{eff}^{H}\left(k\right){\hat{H}}_{eff}\left(k\right)+\left({σ}_{n}^{2}+{σ}_{ICI}^{2}+{σ}_{e}^{2}\right)⋅I\right)}^{- 1}\right]}_{l , l}} - 1$ ${\hat{H}}_{eff} \left(k\right) = \hat{H} \left(k\right) ⋅ P$ ${σ}_{e}^{2} = f \left({τ}_{rms},{f}_{D},{D}_{t},{D}_{f},SNR\left({ρ}_{p}\right)\right)$ where ${σ}_{n}^{2}$ may be thermal noise variance; ${σ}_{ICI}^{2}$ may be inter-carrier interference variance; ${σ}_{e}^{2}$ may be channel estimation error variance, and *Ĥ_{eff}*(*k*) may be an effective estimated channel matrix. The channel estimation error variance may be determined to accommodate for noise that is received with and inseparable from channel estimation process and related to residual thermal noise of reference signal, modelling errors, and algorithmic limitations. Also, P may be a precoding matrix and *Ĥ*(*k*) may be an estimated channel matrix (e.g., DMRS based channel estimation precoding is typically transparent to a UE 115 and is addressed a part of a channel and channel estimation *Ĥ_{eff}* is obtained including a used precoding option P). Moreover, *τᵣₘₛ* may be a delay spread for the channel and *f_{D}* may be a Doppler frequency for the channel. Additionally, *Dₜ* may be a temporal spacing between resource elements used for the demodulation reference signal; *D_{f}* may be a frequency spacing between resource element used for the demodulation reference signal; and *ρₚ* may be a power level used to transmit the reference signal resource elements relative to a power level used to transmit data resource elements. The term *SNR*(*ρₚ*) may be an input SNR on the pilot resource elements used for a demodulation reference signal and may be a function of *ρₚ.*

The UE 115 may determine an average post-processing SINR for each spatial stream *l* by applying an averaging operator, for a spatial stream l, the post-processing SINRs determined across the resource elements k. The average post-processing SINR for a DMRS may be referred to as *γ̅_{lDMRS}.* In some examples, the UE 115 may use Equation 1 to determine a post-processing SINR for a channel using a DMRS, in which case *γₗ*(*k*)*_{RS}* may be represented as *γₗ*(*k*)*_{DMRS}.* In some cases, a post-processing SINR for a channel may be dependent on a configuration of a DMRS-e.g., a post-processing SINR for a channel may be increased or decreased depending on the portion of the channel estimation error which depends on the combination of the channel characteristics and pilot configuration used for channel estimation. A base station 105 may similarly use Equation 1 to determine a per resource element post-processing SINR and average post-processing SINR using an uplink reference signal.

Additionally, or alternatively, a UE 115 may determine a post-processing signal quality ratio (e.g., SINR) for a channel based on the channel characteristics determined using the CSI-RS and CSI-IM resources with noise estimation that is free of channel estimation error component ${σ}_{e}^{2}$-e.g., because the noise measured using the interference management resources may be isolated from the reference signal. That is, the noise component ( ${σ}_{n}^{2} + {σ}_{ICI}^{2} + {σ}_{e}^{2}$ ) can be replaced with the noise variance ${{σ}^{˜}}_{IM}^{2}$ measured using an interference management resource, where ${{σ}^{˜}}_{IM}^{2} ≜ {σ}_{n}^{2} + {σ}_{ICI}^{2}$*.* For example, for a spatial stream *l* and a resource element *k,* a post-processing SINR ( ${γ}_{l}^{′} {\left(k\right)}_{CSI - RS}$) may be determined using a reference signal based on Equation 2: ${γ}_{l}^{′} {\left(k\right)}_{CSIRS} = \frac{1}{{{σ}^{˜}}_{IM}^{2} ⋅ {\left[{\left({\hat{H}}_{eff}^{H}\left(k\right){\hat{H}}_{eff}\left(k\right)+\left({{σ}^{˜}}_{IM}^{2}\right)I\right)}^{- 1}\right]}_{l , l}} - 1$ The UE 115 may determine an average post-processing SINR for each spatial stream *l* by applying an averaging operator on the post-processing SINRs determined for each resource element *k.* The average post-processing SINR may be referred to as ${\overline{γ}}_{l}^{′} {\left(k\right)}_{CSI - RS}$*.*

The post-processing SINR calculated based on Equation 2 and the actual post-processing SINR that is expected in case of PDSCH (defined analytically for the sake of the explanation based on Equation 1) may be different from one another. In some cases, the post-processing SINR representative for PDSCH (which may be represented by the variable *γ_{DMRS}*) and that is expected to be obtained using DMRS based channel estimation and the post-processing SINR calculated based on Equation 2 (which may be represented by the variable *γ_{CSI-RS} )* may be determined based on a CSI-RS and CSI-IM resources. The *γ_{DMRS}* may be an actual representative (or projection) of post processing SINR for channel and reception conditions for data resources allocated to a UE 115 while the *γ_{CSI-RS}* may be an estimate of post processing SINR based on channel and reception conditions for the data resources estimated based on CSI-RS and CSI-IM resources. The expected difference between *γ_{CSI-RS}* and *γ_{DMRS}* can be defined or learned per channel characteristics set and per given reception conditions and may later be used to estimate an *γ_{DMRS}* based on applying an adjustment to a calculated *γ_{CSI-RS}.* In some cases, the difference between the *γ_{DMRS}* and the *γ_{CSI-RS}* may be non-linear, and *γ_{DMRS}* may be determined using a non-linear function-e.g., *γ_{DMRS} = f*(*γ_{CSI-RS}*). A UE 115 may determine a set of mapping functions or average differences between calculated post-processing SINR values for CSI-RS (*γ_{CSI-RS}*) and measured or calculated post-processing SINR values for DMRSs (*γ_{DMRS}*) for different combinations of CSI-RS and DMRS configurations. Thus, a difference provided by a corresponding mapping function between a *γ_{DMRS}* and a *γ_{CSI-RS}* may be based on a configuration of a DMRS and a configuration of a CSI-RS and defined per channel characteristics set and per given input/thermal SNR.

A wireless communications system 100 may also support the reporting of information about a channel determined using reference signals. A UE 115 may use a CSI-RS to determine transmission parameters for a channel, such as a precoding matrix, rank, and modulation coding scheme (MCS). The UE 115 may determine a transmission parameter based on determining that a transmission parameter will maximize a channel metric (e.g., a spectral efficiency metric), based on a post-processing signal quality ratio (e.g., post-processing SINR) for a channel, or both. The UE 115 may indicate the recommended transmission parameters to a base station 105 in a channel state feedback (CSF) report (which may also be referred to as a channel state information (CSI) report) that may have different formats and may include a precoding matrix indicator (PMI) field that conveys a PMI, a rank indicator (RI) field that conveys an RI, a strongest layer indicator (SLI) field that conveys an SLI; and a channel quality indicator (CQI) field that conveys a CQI. The base station 105 may use the PMI and RI to determine a precoding matrix and rank to use for subsequent transmissions and the CQI to determine an MCS for subsequent transmission.

As described above, reference signals may be used to determine measurements for and an estimate of a channel to maintain a reliable and efficient link between wireless devices (e.g., a base station 105 and UE 115). For example, a CSI-RS may be used to adapt transmission parameters. Additionally, a DMRS may be used to determine an estimate of a data channel (e.g., a physical downlink shared channel (PDSCH)) and to assist in the demodulation and decoding of signals received over the data channel. The UE 115 may provide a periodic or aperiodic joint DMRS and CSF report to the base station 105 based on performing the measurements on the reference signals. In some cases, the UE 115 may select a DMRS option as a part of CSF evaluation procedure and may report the DMRS option to the base station 105 (e.g., in a joint DMRS and CSF report). For example, the UE 115 may perform a CSF evaluation and may determine a CQI, a CSF report, or both for the DMRS configuration or may be given an assumption of a DMRS configuration to be addressed for CSF reporting. The DMRS configuration may be selected by a UE 115 from a list of network configured DMRS options to be considered for DMRS selection and reporting or joint DMRS and CSF reporting. In some cases, the UE 115 may provide an extended aperiodic report comprising a list of several selected DMRS and CQI or CSF bundles. The list of DMRS options to be reported with the corresponding CQI or CSF values and the length of the extended joint DMRS and CSF report (e.g., the number of bundles to be reported) may be configured by the network in a dynamic way. For example, the base station 105 may dynamically signal parameters corresponding to the DMRS configurations to be addressed in DMRS selection and reporting process to the UE 115 for an aperiodic DMRS and CSF report. In some examples, the list of DMRS configurations to be addressed by a UE 115 for DMRS selection, reporting of an aperiodic joint DMRS and CSF report, or both may be determined based on the signaled DCI CSI trigger state that may be reconfigured based on RRC signaling, may be dynamically activated or deactivated using MAC-CE signaling, or both.

As described herein, a UE 115 may identify a DMRS configuration based on a CSI reference resource for periodic reporting, which may allow the UE 115 to determine the DMRS configuration for a periodic joint DMRS and CSF report. Additionally or alternatively, the UE 115 may identify a DMRS configuration for regular periodic CSF report in a floating way, such as following the DMRS adaptation process taking place (e.g., without RRC reconfiguration to capture DMRS adaption dynamics in the context of CSF reporting or report configuration). In some cases, the UE 115 may determine a validity condition associated with the CSI reference resource is satisfied. For example, a slot in a serving cell (e.g., associated with the base station 105) may be a valid downlink slot for the CSI reference resource if the slot includes a downlink shared channel (e.g., a physical downlink shared channel (PDSCH)) allocation with a duration greater than a threshold number of symbols. If the slot passes the validity condition (i.e., satisfies the threshold number of symbols), the UE 115 may derive the DMRS configuration from this slot for the CSI reference resource corresponding to the slot. If the slot fails the validity condition (i.e., does not meet the threshold number of symbols), the UE 115 may derive the DMRS configuration assumptions for a CSI reference resource for periodic CSF reporting from the nearest previous valid downlink slot. Additionally or alternatively, if the slot fails the validity condition, the UE 115 may assume a default predefined DMRS configuration assumptions for a CSI reference resource for periodic CSF reporting. In some cases, the CSI reporting may be performed based on one the one or more DMRS configuration assumptions (e.g., CSI reference resource assumptions), which may be predefined, derived by the UE 115 based on the CSI reference resource slot, or a combination.

In some examples, the UE 115 may calculate one or more CSF components (e.g., a CQI, a PMI, an RI, or a combination) based on the DMRS configuration associated with the CSI reference resource. For example, to determine a value for the CQI, the UE 115 may use a post-processing SINR value or estimated spectral efficiency and some CQI mapping function determined assuming-a specific DMRS configuration that obtained based on tracking one or more DMRS related parameters from CSI reference resource slot or an equivalently CSI reference resource. The UE 115 may similarly determine the PMI and the RI. The UE 115 may include the CSF components determined as described above in addition to the selected DMRS configuration option in the joint periodic DMRS and CSF report to the base station 105. In some cases, such as for periodic reporting, a joint DMRS and CSF report may define CSF consistent with the currently used DMRS option (e.g., for the CSI reference resource) and in addition provide an indication of the selected DMRS configuration. In some other cases, such as for aperiodic reporting, a joint DMRS and CSF report may include a list of bundles of the selected DMRS option and the corresponding CQI, CSF, or both.

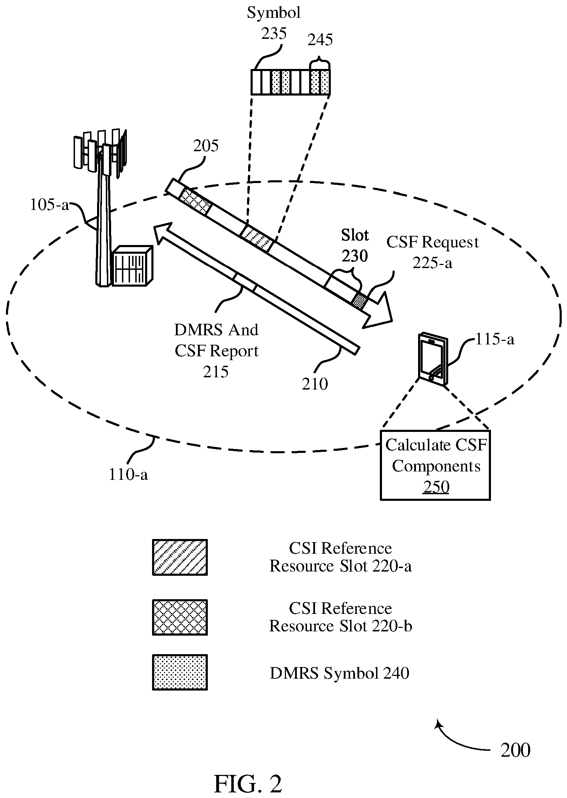

**FIG.** 2 illustrates an example of a wireless communications system 200 that supports dynamic DMRS configuration assumptions for a CSI reference resource for periodic CSF reporting in accordance with aspects of the present disclosure. In some examples, wireless communications system 200 may implement aspects of wireless communications system 100 and may include UE 115-a and base station 105-a with coverage area 110-a, which may be examples of a UE 115 and a base station 105 with a coverage area 110 as described with reference to FIG. 1. In some examples, UE 115-a may be configured by base station 105-a via downlink communication link 205 to periodically transmit a feedback report to base station 105-a via uplink communication link 210. For example, base station 105-a may request a joint periodic DMRS and CSF report 215 or a CSF report from UE 115-a, and UE 115-a may determine a DMRS configuration assumption for the report evaluation (or some of its components) based on a CSI reference resource slot 220, which may allow UE 115-a to efficiently transmit a periodic joint DMRS and CSF report 215 or the CSF report to base station 105-a. Such a technique may facilitate defining the representative of the currently used DMRS configuration to be assumed for CQI determination in a floating way following DMRS adaptation process in time and may allow UE 115-a to report a CQI or CSF report consistent with the current DMRS configuration.

In some cases, a base station 105 may transmit a request for feedback or may schedule a CSF report, which may be included in a CSF request 225, to a UE 115. The CSF request 225 may schedule a joint DMRS and CSF report, a CSF report, or both. For example, base station 105-a may transmit CSF request 225-a to UE 115-a via downlink communication link 205. In some cases, such as for aperiodic reporting, the UE 115 may receive a trigger for the joint DMRS and CSF report (e.g., the CSF request 225). In some other cases, such as for periodic reporting, the UE 115 may receive control signaling (e.g., RRC signaling) including a schedule, such as a periodicity and configuration, for the joint DMRS and CSF report. In some examples, UE 115-a may determine a preferred DMRS configuration as a part of CSF report evaluation and reporting, joint DMRS and CSF reporting 215, or both. The UE 115 may provide a periodic or aperiodic joint DMRS and CSF report 215 (e.g., based on the triggered, aperiodic or configured, periodic report) to the base station 105 based on performing one or more measurements on one or more reference signals (e.g., CSI-RS, CSI-IM, TRS, or the like). For example, the UE 115 may perform a CSF evaluation and may determine one or more components of the CSF report (e.g., a PMI, an RI, a CQI, or a combination). In some cases, the CSF is evaluated based on one or more DMRS assumptions. In the case of a joint periodic DMRS and CSF report, the UE 115 may report CSF consistent with the current DMRS option (e.g., used on the CSI reference resource slot). In case of extended aperiodic joint DMRS and CSF reporting UE may report several bundles of the selected DMRS and the corresponding CQI/CSF, where CQI/CSF for each bundle is determined based on the corresponding selected DMRS configuration. DMRS reporting allows UE assisted DMRS adaptation for the communication link. For aperiodic reporting the base station 105 may dynamically signal parameters corresponding to the DMRS configurations to be addressed for DMRS selection and reporting in a joint aperiodic DMRS and CSF report 215 (e.g., may be dynamically configured under the corresponding CSI trigger states). The base station 105 may configure a list of DMRS configurations to be addressed for DMRS selection and reporting (e.g., for periodic and aperiodic DMRS reporting). For aperiodic reporting, the base station 105 may configure the list of DMRS configurations to be addressed based on a bitmap indication configured under a corresponding CSI trigger state, which may allow flexible reconfiguration.

In some cases, the current DMRS configuration (e.g., the DMRS preference from the perspective of the base station 105-a or the UE 115-a) may not change frequently. Thus, for CSF reporting consistent with the current DMRS configuration, a UE 115 may determine a DMRS configuration based on a CSI reference resource slot 220 that satisfies one or more validity criteria. A slot or a symbol 235 may have a time duration and may be allocated by base station 105-a for an uplink transmission, a downlink transmission, or may be flexible (e.g., either uplink or downlink). In some cases, the CSI reference resource slot 220 may be a downlink slot with a downlink subcarrier spacing. The UE 115 may determine the location of the CSI reference resource slot 220 based on a slot offset.

In some cases, the UE 115 may identify a CSI reference resource slot 220 and a determination rule, which may be associated with a valid downlink slot 230. The UE 115 may define CSI reference resource assumptions for a CSF evaluation based on the valid CSI reference resource slot 220. For example, UE 115-a may identify CSI reference resource slot 220-a carrying PDSCH allocation with a specific DMRS configuration. Each DMRS symbol 240 may have a location relative to a first symbol 235 of PDSCH allocation on the CSI reference resource slot 220. In some cases, the UE 115 may determine one or more DMRS related parameters based on PDSCH allocation on the CSI reference resource slot 220 based on one or more CSI reference resource assumptions. For example, the UE 115 may determine (e.g., track) a time density, a frequency density, a boosting value, or a combination for a DMRS configuration used for PDSCH allocation on a CSI reference resource slot 220 based on the one or more CSI reference resource assumptions. A DMRS configuration may include an indication of the one or more parameters, the location of the DMRS symbols 240 relative to a start symbol 240 of the CSI reference resource slot 220, or both.

The UE 115 may determine whether a CSI reference resource slot 220 satisfies a validity criteria. For example, a validity criteria may be a slot carrying PDSCH allocation with a minimum duration. In some cases, the validity criteria may be defined as a downlink shared channel (e.g., a PDSCH) allocation having a duration greater than a threshold number of symbols 235. The threshold number of symbols 235 may be predefined. This threshold duration validity criteria may be satisfied in addition or complementary to other (e.g., conventional) CSI reference resource slot validity criteria, such as downlink or flexible symbol configuration and UE measurement gap configuration. The UE 115-a may determine if CSI reference resource slot 220-a satisfies the validity criteria and may determine a DMRS configuration based on the PDSCH allocation in CSI reference resource slot 220 (e.g., the number of front loaded DMRS symbols should be assumed as for PDSCH allocation on CSI reference resource slot 220-a, the number of additional DMRS symbols 240 and all DMRS symbols locations relative to the first symbol of the PDSCH allocation should be assumed based on the DMRS configuration for the PDSCH allocation on CSI reference resource slot 220-a and the PDSCH allocation duration assumption of 12 OFDM symbols, a DMRS type as for PDSCH allocation on CSI reference resource slot 220-a, the PDSCH allocation for CSI reference resource definitions may include DMRS symbols, DMRS boosting or corresponding number of DMRS CDM groups without data should be assumed as for the PDSCH allocation on CSI reference resource slot 220-a and constrained to the selected RI,, or a combination). In some cases, the DMRS may be either a Type A DMRS with two options for a boosting value (e.g., if the DMRS REs are not multiplexed with data REs or are multiplexed with data REs) or a Type B DMRS with three options for the boosting value (e.g., depending on multiplexing of data and DMRS REs). In some examples, the number of front loaded DMRS symbols 245 for a CSI reference resource may be based on the downlink shared channel allocation for the corresponding CSI reference resource slot 220. The UE 115 may determine the number of additional DMRS symbols 245 and the DMRS symbol locations relative to the first symbol of the downlink shared channel allocation based on a DMRS configuration for the downlink shared channel allocation on the CSI reference resource slot 220 and a predefined downlink shared channel allocation duration (e.g., 12 OFDM symbols). In some cases, one or more downlink shared channel symbols may be DMRS symbols 240.

As described here, the CSF evaluation (e.g., including the CQI evaluation) may be done consistently with the representative current DMRS configuration identified based on the CSI reference resource slot up to the PDSCH allocation duration assumption which may be variable from allocation to allocation. In some cases, a PDSCH allocation duration of 12 OFDM symbols may be assumed, which may keep a uniform assumption for all CSF reports regardless of the actual scheduled allocation size on CSI reference resource slot. The PDSCH allocation duration assumption may be defined as part of a CSI reference resource definition, as described in more detail below.

A CSI reference resource definition may be defined such that the UE or base station may assume some parameters for the CSI reference resource when configured to report CQI (or other components of a CSF report, such as PMI or RI). Some currently defined assumptions relied upon by the UE (and base station) for CSI reference resource definitions may be modified to support consistent CSF reporting with DMRS adaptation adopted by the system such that DMRS configuration assumptions will be defined in a floating way and will follow DMRS adaptation for PDSCH. This approach may be particularly useful for periodic CSF reporting or periodic joint DMRS and CFS reporting which may be based on DMRS configuration assumptions derived from a CSI reference resource slot (or equivalently based on CSI reference resource). Some of the assumptions listed under CSI reference resource definitions may remain unchanged and may be predefined regardless of the PDSCH allocation parameters on the CSI reference resource slot. For example, the UE 115 may assume that the first two OFDM symbols corresponding to the CSI reference resource are occupied by control signaling. This assumption may be made regardless of the PDSCH allocation corresponding to the CSI reference resource slot identified by the UE 115. Further, the UE 115 may assume the number of PDSCH and DMRS symbols for the CSI reference resource is equal to 12. This assumption may also be made regardless of the actual size of the PDSCH allocation corresponding to the CSI reference resource slot identified by the UE.

The number of front loaded DMRS symbols for the CSI reference resource definition may be assumed as the same as for the PDSCH allocation corresponding to the CSI reference resource slot. Further, the number of additional DMRS symbols and all DMRS symbol locations relative to the first symbol of the PDSCH allocation may be assumed based on the DMRS configuration for the PDSCH allocation on the CSI reference resource slot and PDSCH allocation duration of 12 OFDM symbols. The DMRS type for the CSI reference resource definition may be assumed as the same as for the PDSCH allocation on the CSI reference resource slot. Additionally, it may be assumed that PDSCH allocation addressed in the definitions of CSI reference resource contain DMRS symbols and DMRS resource elements boosting or correspondingly number of DMRS CDM groups without data is as for the PDSCH allocation on the CSI reference resource slot and constrained by the selected RI.

In some examples, UE 115-a may determine CSI reference resource slot 220-a does not satisfy a new validity criteria (e.g., the downlink shared channel allocation for CSI reference resource slot 220-a may have a duration less than a new threshold number of symbols). In such cases, the UE 115-a may utilize one or more fallback options for DMRS assumptions and CSI reference resource slot determination. For example, the UE 115-a may derive a DMRS configuration assumptions for a CSI reference resource for periodic CSF reporting from the nearest, previous slot that is addressed as an alternative CSI reference resource slot 220 and that satisfies the new validity condition (e.g., with a downlink shared channel allocation duration greater than the new threshold number of symbols). For example, UE 115-a may identify alternative CSI reference resource slot 220-b is the nearest, previous and valid CSI reference resource slot 220 with a downlink shared channel allocation duration greater than the threshold number of symbols (and that satisfies any other applicable CSI reference resource slot validity criteria). UE 115-a may use CSI reference resource slot 220-b to derive the DMRS configuration assumptions for the periodic DMRS and CSF report 215 (or regular periodic CSF report). In such examples, the UE 115-a may utilize the CSI reference resource definition and assumptions as described above based on CSI reference resource slot 220-b.

Additionally or alternatively, as a fallback option the CSI reference resource slot validity criteria is not satisfied, UE 115-a may assume a predefined default DMRS configuration assumptions for a CSI reference resource for periodic CSF reporting. That is, UE 115-a may determine one or more default parameters (e.g., a number of front loaded DMRS symbols 245, a number of additional DMRS symbols 240, locations of DMRS symbols 240 relative to a first symbol of the PDSCH allocation, a DMRS type, DMRS boosting or a combination) based on CSI reference resource assumptions. In some cases, the assumptions may be configured by a base station 105, preconfigured at the UE 115, or the like.

In some cases, UE 115-a may calculate one or more CSF components 250 based on the DMRS configuration associated with the CSI reference resource. For example, UE 115-a may determine the DMRS configuration to be assumed for CSF evaluation based on a CSI reference resource slot 220 (e.g., CSI reference resource slot 220-a, CSI reference resource slot 220-b, or another valid DL slot) and may calculate a PMI, RI, or CQI based on the DMRS configuration. UE 115-a may report the calculated CSF components to base station 105-a in a join DMRS and CSF report 215 or in a CSF report.

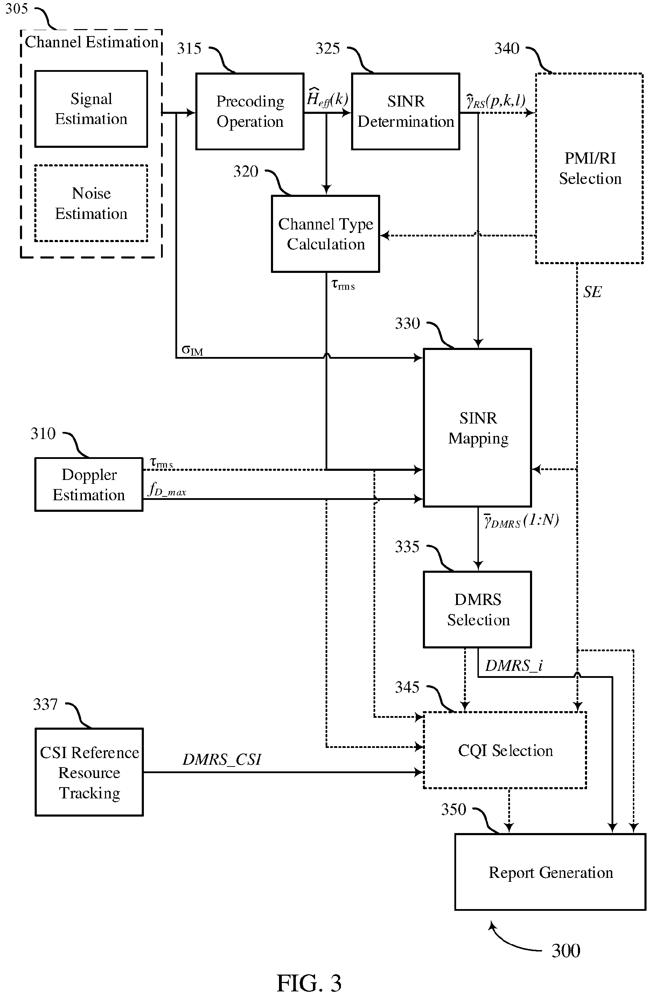

**FIG.** 3 illustrates a collection of operations that supports dynamic DMRS configuration assumptions for a CSI reference resource for periodic CSF reporting in accordance with aspects of the present disclosure. In some examples, process flow 300 may be implement aspects of wireless communications system 100, wireless communications system 200, or both. Aspects of the process flow 300 may be implemented by a UE 115, a base station 105, or both, as described with reference to FIGs. 1 and 2. For example, the process flow 300 may illustrate a process for determining a DMRS configuration based on a CSI reference resource for a joint DMRS and CSF report or a CSF report. Process flow 300 may be related to a process for using reference signals to determine channel characteristics that may be in turn used to determine a recommended transmission parameters, such as a DMRS configuration, precoding matrix, rank, and MCS.

One skilled in the art would understand that one or more of the operations described in process flow 300 may be performed earlier or later in the process, omitted, replaced, supplemented, or any combination thereof. Also, additional operations described herein that are not included in process flow 300 may be included.

At block 305, a wireless device (e.g., a base station 105 or UE 115) may obtain an estimate of a channel between a transmitting device and the receiving device. Estimating the channel may include an estimation of the channel based on a reference signal (e.g., based on a CSI-RS, an uplink DMRS, a SRS, or a combination). Estimating the channel may also include an estimation of a noise component of channel based on an interference management resource (e.g., based on a CSI-IM resource)-e.g., if the wireless device is a UE 115.

At block 310, the wireless device may obtain an estimate of a Doppler frequency of the channel. The wireless device may estimate the Doppler frequency based on a received reference signal. For example, if the wireless device is a UE, the wireless device may estimate the Doppler frequency for the downlink channel based on a DMRS or a TRS. If the wireless device is a base station 105, the wireless device may estimate the Doppler frequency for the uplink channel based on DMRS or based on a specially configured SRS, as described herein. Or the base station 105 may determine the Doppler frequency for the uplink channel based on the Doppler frequency reported for the downlink channel. In some cases, the wireless device may also determine a delay spread based on the received reference signal (e.g., the DMRS, TRS, or SRS).

At block 315, the wireless device may determine one or more effective channel matrices based on applying the different combinations of precoding matrices and rank hypothesis to the channel estimate determined during the channel estimation operation.

At block 320, the wireless device may classify the channel based on one or more of the effective channel estimates obtained after applying the tested precoding operation-e.g., the channel may be classified in terms of its frequency selectiveness or delay spread characteristics. The wireless device may also determine a delay spread for the channel based on the effective channel estimates. In some examples, the delay spread is determined for an effective channel estimate that corresponds to a precoding matrix and rank that have been selected for the channel to optimize link efficiency.

At block 325, the wireless device may determine one or more post-processing signal quality ratios (e.g., SNR or SINR) based on the effective channel matrices obtained after applying a precoding operation. In some cases, the precoding operation may be omitted-e.g., if a received reference signal is already precoded. In some cases, the wireless device may determine, for each stream *l,* each resource element *k,* and each precoding matrix *p,* a signal quality ratio *γ̂_{RS}*(*p, k, l*). The one or more signal quality ratios may be represented based on Equation 1-e.g., if the wireless device does not obtain a noise estimate that is free of a channel estimation error component. Additionally, or alternatively, the one or more signal quality ratios may be determined based on Equation 2-e.g., if the wireless device is a UE 115 and based on CSI-RS and CSI-IM resources. When the noise estimation free of channel estimation error can be obtained, the wireless device may use Equation 2 to estimate post-processing SINR. When noise estimation cannot be obtained free of channel estimation error component, the wireless device may assume Equation 1 for representation of the estimated post-processing SINR. The channel estimate may be represented using a channel matrix.

At block 330, the wireless device may execute a mapping from an SINR computed for a received reference signal (e.g., a CSI-RS, uplink DMRS, or SRS) to multiple SINRs projected for a set of DMRS configurations to be addressed in DMRS selection procedure for joint DMRS and CSF reporting. The estimated SINRs may be represented as *γ̅_{DMRS}*(1: *N).* As described herein and with reference to FIG. 2, the wireless device may identify a mapping based on an indication of a first set of characteristics for the channel (e.g., a combination of a delay spread *τᵣₘₛ,* Doppler frequency *f_{D},* and/or noise variance ${{σ}^{˜}}_{IM}^{2}$ if the wireless device is a UE, or a combination of a delay spread *τᵣₘₛ,* Doppler frequency *f_{D},* and/or reception SNR if the wireless device is a base station 105) and a configuration of the received reference signal having a combination of a temporal spacing, frequency spacing, and power boosting. The Doppler frequency may be determined based on the Doppler estimation. And the noise variance may be determined based on the noise estimation.

Before executing the mapping, the SINRs computed for the received reference signal (*γ̂_{RS}*(*p, k, l*)) may be averaged some way across the set of resource elements *k* for each stream *l* and precoding matrix p. To compute the SINR for the received reference signal, the wireless device may average a set of SINRs computed for different resource elements, on a per stream basis and in accordance with a selected precoding matrix and rank. In some cases, an indication of the precoding matrix and rank is provided to the SINR mapping operation based on a prior or concurrent determination of the precoding matrix and rank. The SINR mapping operation may use the indicated precoding matrix and rank to determine which version of SINR estimates determined at block 325 to use for the SINR mapping.

At block 335, the wireless device may select one of the DMRS configurations for joint DMRS and CSF report. The wireless device may select the DMRS configuration of the DMRS configurations that maximizes a communication metric for the channel, such as effective spectral efficiency. That is, the wireless device may select the DMRS configuration, *DMRS_i,* that yields a larger value for the communication metric than the other DMRS configurations.

At block 337, the wireless device may determine a DMRS configuration for a periodic CSF report or periodic joint DMRS and CSF report based on a CSI reference resource, as described with reference to FIG. 2. For example, the wireless device may track one or more DMRS related parameters (e.g., a time density, a frequency density, a boosting value, or a combination) for a CSI reference resource based on a CSI reference resource slot, and may determine a DMRS configuration *DMRS_CSI* based on the DMRS related parameters determined based on PDSCH allocation on CSI reference resource slot. In some cases, the wireless device may determine whether the CSI reference resource slot is a valid downlink slot for the CSI reference resource based on a downlink shared channel allocation having a duration greater than a threshold number of symbols. In some examples, if the slot pointed by CSI reference resource slot time determination rule is not a valid downlink slot for DMRS assumptions determination or for CSI reference resource assumptions in general, the wireless device may follow alternative option (or alternative CSI reference resource slot) to derive the DMRS configuration *DMRS_CSI* for a CSI reference resource based on the nearest, previous valid from CSI reference resource criteria point of view downlink slot. In some other examples, if the CSI reference resource slot is not a valid downlink slot for DMRS parameters determination, the wireless device may assume a default DMRS configuration *DMRS_CSI* for a CSI reference resource.

At block 340, the wireless device may determine a precoding matrix and rank that allow for a highest spectral efficiency of the channel compared to other tested precoding and rank hypotheses-e.g., based on the determined signal quality ratios. As described herein, the selected precoding matrix and rank may be used by the SINR mapping operation to determine an average estimated SINR for a received reference signal that corresponds to a selected precoding matrix and rank. The wireless device may also determine a corresponding spectral efficiency for the channel associated with the selected precoding matrix and rank. In some cases, the precoding matrix and rank selection operation is not performed.

At block 345, the wireless device may determine a value of a recommended CQI. The CQI determination may be based on the delay spread *τᵣₘₛ,* Doppler frequency *f_{D_max},* and DMRS configuration *DMRS_CSI* for periodic reporting or DMRS configuration *DMRS_i* for aperiodic reporting, spectral efficiency *SE,* or a combination. The CQI determination may also be based on the estimated SE for the effective channel determined during the precoding matrix and rank selection operation. In some cases, the wireless device determines a value for the CQI that is associated with an MCS that is optimized for the DMRS configuration and channel conditions. In some cases, the CQI selection operation is replaced by MCS selection-e.g., if the wireless device is a base station 105.

At block 350, the wireless device may generate a report (e.g., CSF report if the wireless device is a UE) that may include an indication of the recommended one or more DMRS configurations. In some examples, generating the report includes generating a CSF report that includes a PMI, RI, CQI, and DMRS configuration indicator (DMI). A size of the DMI field may be based on a quantity of DMRS configurations that are tested/available for communications. In other cases, the CSF report may jointly encode the CQI and DMI based on a relationship between CQI values and DMRS configurations. The jointly encoded CQI and DMI may be conveyed by a CQI field or a combined CQI/DMI field. By including the jointly encoded CQI and DMI in a CQI field, a CSF reporting format may be unchanged while being used to convey additional data and overhead signaling may be also reduced using joint CQI and DMI coding. In some examples, generating the report includes generating a control message that recommends to the transmitting device to use the indicated DMRS configuration for subsequent transmissions-e.g., if the transmitting device is a base station 105.

The wireless device may transmit the report to a transmitting device. When the report includes or is a CSF report or joint DMRS and CSF report, a transmitting device may adapt transmission parameters based on the received CSF report or joint DMRS and CSF report.

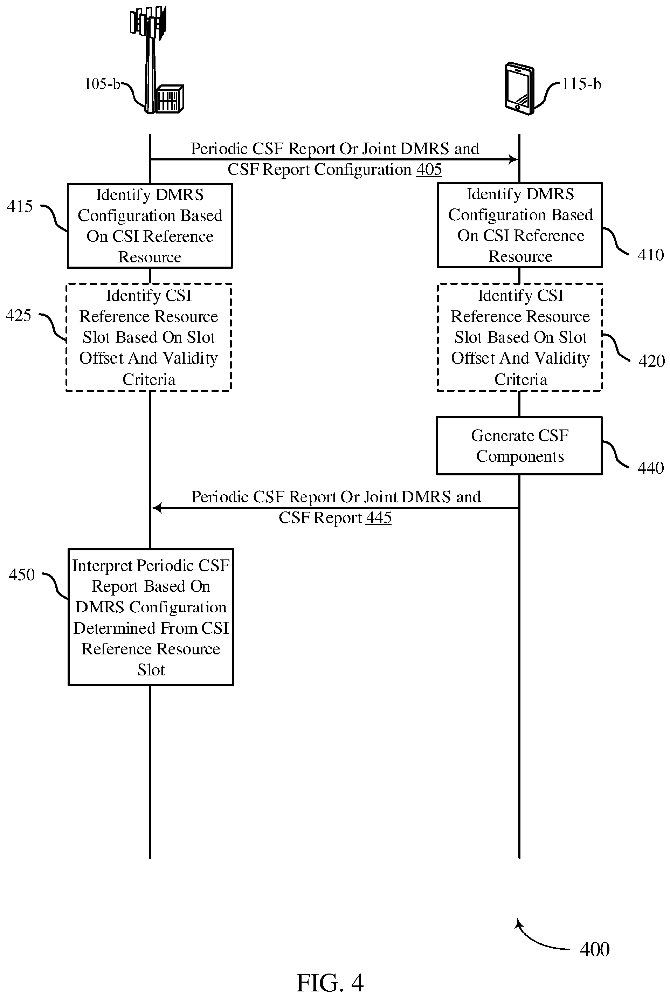

**FIG.** 4 illustrates an example of a process flow 400 that supports dynamic DMRS configuration assumptions for a CSI reference resource for periodic CSF reporting in accordance with aspects of the present disclosure. In some examples, process flow 400 may implement aspects of wireless communications system 100, wireless communications system 200, or both as well as process flow 300. The process flow 400 may illustrate an example of a UE 115, such as UE 115-b, or a base station 105, such as base station 105-b, identifying a DMRS configuration for a joint DMRS and CSF report or a CSF report based on a CSI reference resource. Alternative examples of the following may be implemented, where some processes are performed in a different order than described or are not performed. In some cases, processes may include additional features not mentioned below, or further processes may be added.

At 405, UE 115-b may receive a configuration for a periodic CSF report or joint DMRS and CSF report from base station 105-b. For example, UE 115-b may receive a CSF report request (e.g., via RRC signaling) to configure the UE to transmit a periodic CSF report or a joint periodic DMRS and CSF report. The CSF report request may trigger UE 115-b to perform one or more measurements on one or more reference signals.

At 410 and 415, UE 115-b and base station 105-b, respectively, may identify a DMRS configuration based on a CSI reference resource. In some cases, UE 115-b may identify the DMRS configuration. In some cases, the CSI reference resource may include a number of front loaded DMRS symbols, a number of additional DMRS symbols, a DMRS type, a DMRS boosting, or a combination from the DMRS configuration associated with a downlink shared channel allocation on the CSI reference resource slot associated with the corresponding CSI reference resource. A DMRS type may be based on the DMRS configuration, the CSI reference resource slot, or both.

At 420 and 425, UE 115-b and base station 105-b, respectively, may identify a CSI reference resource slot for determining the DMRS configuration based on a slot offset and a validity criteria for the CSI reference resource slot. In some cases, the validity criteria may include a minimum threshold number of symbols for a downlink shared channel (e.g., PDSCH) allocation. In some cases, UE 115-b may determine the validity criteria is not satisfied for a CSI reference resource slot. That is, the downlink shared channel allocation for the CSI reference resource slot may be less than the threshold number of symbols UE 115-b may identify an alternative CSI reference resource slot to be addressed for CSI reference resource assumptions based on the alternative CSI reference resource slot satisfying the validity criteria and occurring in a closest prior slot to the initial CSI reference resource slot.

In some cases, UE 115-b and base station 105-b, respectively, may derive a DMRS configuration assumption for a CSF evaluation based on a downlink shared channel allocation on the CSI reference resource slot (e.g., a CSI reference resource slot that satisfies the validity criteria at 420 and 425). In some cases, UE 115-b may derive one or more parameters corresponding to the CSI reference resource. For example, UE 115-b may define a number of front loaded DMRS symbols, a number of additional DMRS symbols, the corresponding locations of all DMRS symbols relative to a first symbol of the downlink shared channel allocation assuming a predefined PDSCH allocation duration (for example duration of 12 OFDM symbols), a DMRS type (e.g., Type A or Type B), DMRS boosting or correspondingly number of DMRS CDM groups without data or a combination. Additionally or alternatively, if the validity criteria is not satisfied for a CSI reference resource slot at 420 and 425, UE 115-b may derive a DMRS configuration assumption for a CSF evaluation based on a default DMRS configuration. In some cases, the default DMRS configuration may be predefined for CSI reference resource assumptions. The default DMRS configuration may define explicitly or implicitly one or more default parameters (e.g., a number of front loaded DMRS symbols, a number of additional DMRS symbols, locations of all DMRS symbols relative to a first symbol of the downlink shared channel allocation, a DMRS type, DMRS boosting or a combination).

At 440, UE 115-b may generate (e.g., may calculate) one or more CSF components based on the DMRS configuration. Additionally, UE 115-b may select a most convenient DMRS configuration to be reported in a joint DMRS and CSF report. In some cases, DMRS hypothesis selection may be done from a list of DMRS hypotheses configured by the network for the corresponding reporting joint DMRS and CSF reporting.

At 445, UE 115-b may transmit a periodic CSF report or a joint DMRS and CSF report to base station 105-b. The periodic CSF report or joint DMRS and CSF report may include an indication of the one or more components of CSF and the recommended DMRS option indication.

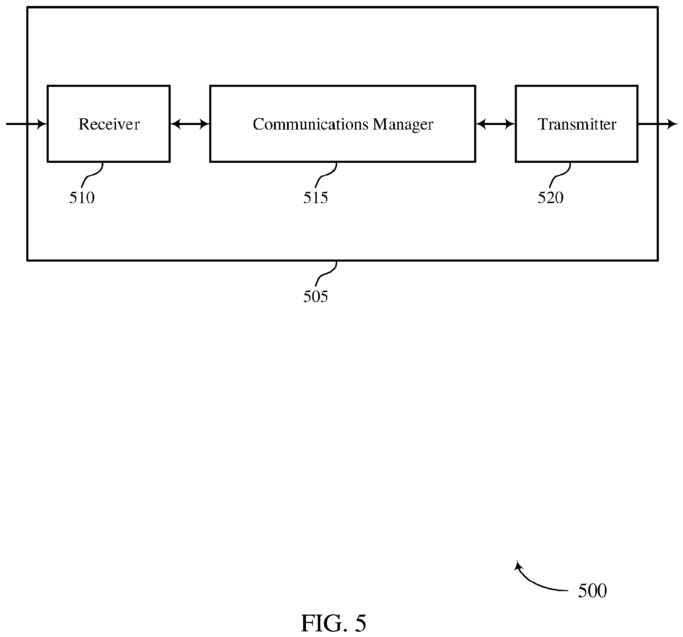

**FIG.** 5 shows a block diagram 500 of a device 505 that supports dynamic DMRS configuration assumptions for a CSI reference resource for periodic CSF reporting in accordance with aspects of the present disclosure. The device 505 may be an example of aspects of a UE 115 as described herein. The device 505 may include a receiver 510, a communications manager 515, and a transmitter 520. The device 505 may also include a processor. Each of these components may be in communication with one another (e.g., via one or more buses).

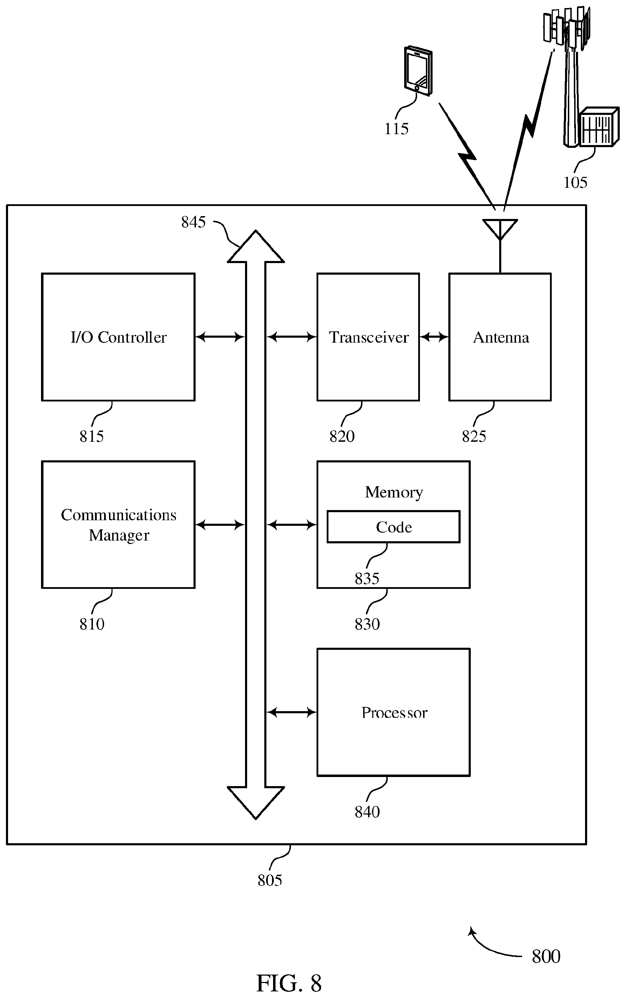

The receiver 510 may receive information such as packets, user data, or control information associated with various information channels (e.g., control channels, data channels, and information related to DMRS configuration assumptions for a CSI reference resource for periodic CSF reporting, etc.). Information may be passed on to other components of the device 505. The receiver 510 may be an example of aspects of the transceiver 820 described with reference to FIG. 8. The receiver 510 may utilize a single antenna or a set of antennas.

The communications manager 515 may receive a configuration for periodic CSF reporting, identify a DMRS configuration associated with a first CSI reference resource based on receiving the configuration, generate one or more components of CSF based on the DMRS configuration associated with the first CSI reference resource, and transmit, to a base station, an indication of the generated one or more components of CSF in a periodic CSF report. The communications manager 515 may be an example of aspects of the communications manager 810 described herein. In some examples, generating the one or more components of CSF may include calculating the one or more components based on the DMRS configuration.

The actions performed by the communications manager 515 as described herein may be implemented to realize one or more potential advantages. One implementation may enable a UE to identify a DMRS configuration based on a CSI reference resource in a valid CSI reference resource slot. The identified DMRS configuration may enable the UE to transmit a periodic joint DMRS and CSF report or a CSF report with reduced signaling overhead when compared with an aperiodic joint DMRS and CSF report or a CSF report, which may improve communication latency (e.g., related to unnecessarily DMRS configuration updates for aperiodic reports), among other advantages.

Based on implementing the DMRS configuration based on a CSI reference resource as described herein, a processor of a UE or a base station (e.g., a processor controlling the receiver 510, the communications manager 515, the transmitter 520, or a combination thereof) may reduce the impact or likelihood of inefficient resource utilization due to unnecessary aperiodic joint DMRS and CSF reporting or a CSF reporting while ensuring relatively efficient communications. For example, the DMRS configuration identification techniques described herein may leverage a validity criteria for a CSI reference resource slot, which may realize power savings at the UE (e.g., due to less frequent reporting), among other benefits.

The communications manager 515, or its sub-components, may be implemented in hardware, code (e.g., software or firmware) executed by a processor, or any combination thereof. If implemented in code executed by a processor, the functions of the communications manager 515, or its sub-components may be executed by a general-purpose processor, a digital signal processor (DSP), an application-specific integrated circuit (ASIC), a field-programmable gate-array (FPGA) or other programmable logic device, discrete gate or transistor logic, discrete hardware components, or any combination thereof designed to perform the functions described in the present disclosure.

The communications manager 515, or its sub-components, may be physically located at various positions, including being distributed such that portions of functions are implemented at different physical locations by one or more physical components. In some examples, the communications manager 515, or its sub-components, may be a separate and distinct component in accordance with various aspects of the present disclosure. In some examples, the communications manager 515, or its sub-components, may be combined with one or more other hardware components, including but not limited to an input/output (I/O) component, a transceiver, a network server, another computing device, one or more other components described in the present disclosure, or a combination thereof in accordance with various aspects of the present disclosure.

The transmitter 520 may transmit signals generated by other components of the device 505. In some examples, the transmitter 520 may be collocated with a receiver 510 in a transceiver module. For example, the transmitter 520 may be an example of aspects of the transceiver 820 described with reference to FIG. 8. The transmitter 520 may utilize a single antenna or a set of antennas.

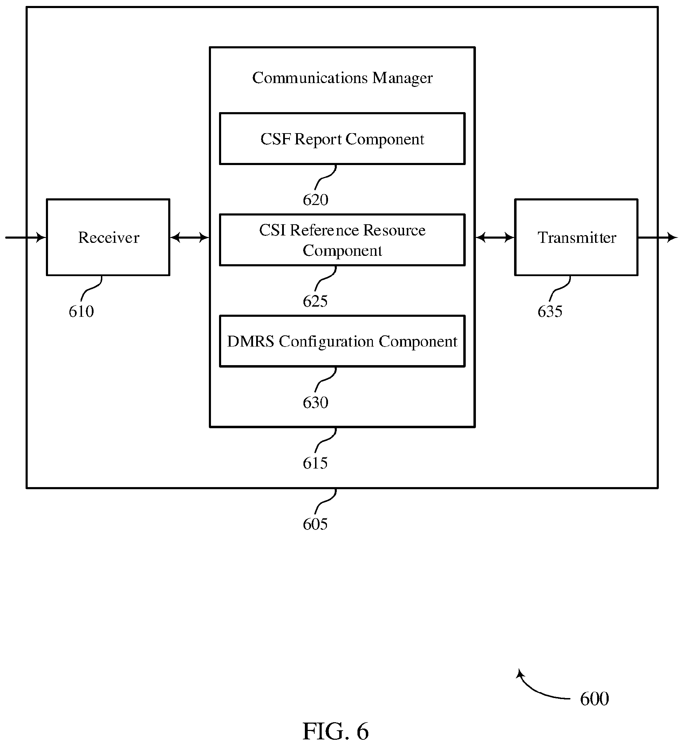

FIG. 6 shows a block diagram 600 of a device 605 that supports dynamic DMRS configuration assumptions for a CSI reference resource for periodic CSF reporting in accordance with aspects of the present disclosure. The device 605 may be an example of aspects of a device 505, or a UE 115 as described herein. The device 605 may include a receiver 610, a communications manager 615, and a transmitter 635. The device 605 may also include a processor. Each of these components may be in communication with one another (e.g., via one or more buses).

The receiver 610 may receive information such as packets, user data, or control information associated with various information channels (e.g., control channels, data channels, and information related to dynamic DMRS configuration assumptions for a CSI reference resource for periodic CSF reporting, etc.). Information may be passed on to other components of the device 605. The receiver 610 may be an example of aspects of the transceiver 820 described with reference to FIG. 8. The receiver 610 may utilize a single antenna or a set of antennas.

The communications manager 615 may be an example of aspects of the communications manager 515 as described herein. The communications manager 615 may include a CSF report component 620, a CSI reference resource component 625, and a DMRS configuration component 630. The communications manager 615 may be an example of aspects of the communications manager 810 described herein.

The CSF report component 620 may receive a configuration for periodic CSF reporting. The CSI reference resource component 625 may identify a DMRS configuration associated with a first CSI reference resource based on receiving the configuration. The DMRS configuration component 630 may generate one or more components of CSF based on the DMRS configuration associated with the first CSI reference resource. The CSF report component 620 may transmit, to a base station, an indication of the generated one or more components of CSF in a periodic CSF report. In some examples, generating the one or more components of CSF may include calculating the one or more components based on the DMRS configuration.

The transmitter 635 may transmit signals generated by other components of the device 605. In some examples, the transmitter 635 may be collocated with a receiver 610 in a transceiver module. For example, the transmitter 635 may be an example of aspects of the transceiver 820 described with reference to FIG. 8. The transmitter 635 may utilize a single antenna or a set of antennas.

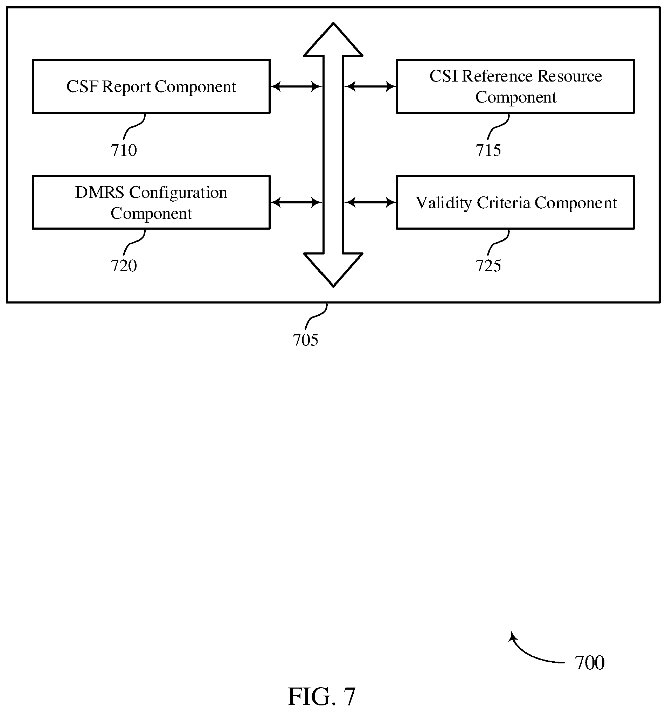

FIG. 7 shows a block diagram 700 of a communications manager 705 that supports dynamic DMRS configuration assumptions for a CSI reference resource for periodic CSF reporting in accordance with aspects of the present disclosure. The communications manager 705 may be an example of aspects of a communications manager 515, a communications manager 615, or a communications manager 810 described herein. The communications manager 705 may include a CSF report component 710, a CSI reference resource component 715, a DMRS configuration component 720, and a validity criteria component 725. Each of these modules may communicate, directly or indirectly, with one another (e.g., via one or more buses).

The CSF report component 710 may receive a configuration for periodic CSF reporting. In some cases, the periodic CSF report includes a periodic joint DMRS and CSF report.

The CSI reference resource component 715 may identify a DMRS configuration associated with a first CSI reference resource based on receiving the configuration. In some examples, the CSI reference resource component 715 may identify, for a CSI reference resource definition, a number of front loaded DMRS symbols from the DMRS configuration associated with a physical downlink shared channel allocation on a first CSI reference resource slot corresponding to the first CSI reference resource.

In some examples, the CSI reference resource component 715 may identify a first CSI reference resource slot corresponding to the first CSI reference resource based on a CSI reference resource slot offset and a first CSI reference resource slot validity criteria. In some examples, the DMRS configuration component 720 may derive a DMRS configuration assumption for CSF evaluation based on a downlink shared channel (e.g., PDSCH) allocation on the first CSI reference resource slot.

The validity criteria component 725 may identify a second CSI reference resource slot based on a CSI reference resource slot offset and a first CSI reference resource slot validity criteria. In some examples, the CSI reference resource component 715 may identify an additional CSI reference resource slot validity criteria for the second CSI reference resource slot, where the additional CSI reference resource slot validity criteria includes a minimum threshold number of symbols for a physical downlink shared channel allocation on the second CSI reference resource slot.

In some examples, the validity criteria component 725 may determine that the additional CSI reference resource slot validity criteria is not satisfied for the second CSI reference resource slot. In some examples, the validity criteria component 725 may identify a first CSI reference resource slot corresponding to the first CSI reference resource based at least part on the first CSI reference resource slot satisfying the additional CSI reference resource slot validity criteria, satisfying the first CSI reference resource slot validity criteria, and occurring in a closest prior slot to the second CSI reference resource slot. In some examples, the DMRS configuration component 720 may derive a DMRS configuration assumption for CSF evaluation based on the physical downlink shared channel allocation on the first CSI reference resource slot. In some examples, the DMRS configuration component 720 may derive one or more parameters corresponding to the first CSI reference resource, defining explicitly or implicitly the one or more parameters including a number of front loaded DMRS symbols, a number of additional DMRS symbols, locations of all DMRS symbols relative to a first symbol of the physical downlink shared channel allocation, a DMRS type, or a combination thereof.

In some examples, the validity criteria component 725 may determine that the additional CSI reference resource slot validity criteria is not satisfied for the second CSI reference resource slot. In some examples, the DMRS configuration component 720 may derive a DMRS configuration assumption for CSF evaluation based on a default DMRS configuration that is predefined for CSI reference resource assumptions. In some cases, the default DMRS configuration defines explicitly or implicitly one or more default parameters, the one or more default parameters including a number of front loaded DMRS symbols, a number of additional DMRS symbols, locations of all DMRS symbols relative to a first symbol of the physical downlink shared channel allocation, a DMRS type, or a combination thereof.

In some examples, the CSI reference resource component 715 may identify, for a CSI reference resource definition, a number of additional DMRS symbols and locations of all DMRS symbols relative to a first symbol of a downlink shared channel (e.g., a PDSCH) allocation based on the DMRS configuration associated with the physical downlink shared channel allocation on a first CSI reference resource slot for the first CSI reference resource and based on a predefined assumption of physical downlink shared channel allocation duration.

The DMRS configuration component 720 may generate one or more components of CSF based on the DMRS configuration associated with the first CSI reference resource. In some cases, a DMRS type is based on the DMRS configuration associated with a physical downlink shared channel allocation on a first CSI reference resource slot for the first CSI reference resource.

In some examples, the CSF report component 710 may transmit, to a base station, an indication of the generated one or more components of CSF in a periodic CSF report.

FIG. 8 shows a diagram of a system 800 including a device 805 that supports dynamic DMRS configuration assumptions for a CSI reference resource for periodic CSF reporting in accordance with aspects of the present disclosure. The device 805 may be an example of or include the components of device 505, device 605, or a UE 115 as described herein. The device 805 may include components for bi-directional voice and data communications including components for transmitting and receiving communications, including a communications manager 810, an I/O controller 815, a transceiver 820, an antenna 825, memory 830, and a processor 840. These components may be in electronic communication via one or more buses (e.g., bus 845).

The communications manager 810 may receive a configuration for periodic CSF reporting, identify a DMRS configuration associated with a first CSI reference resource based on receiving the configuration, generate one or more components of CSF based on the DMRS configuration associated with the first CSI reference resource, and transmit, to a base station, an indication of the generated one or more components of CSF in a periodic CSF report.

The I/O controller 815 may manage input and output signals for the device 805. The I/O controller 815 may also manage peripherals not integrated into the device 805. In some cases, the I/O controller 815 may represent a physical connection or port to an external peripheral. In some cases, the I/O controller 815 may utilize an operating system such as iOS^{®}, ANDROID^{®}, MS-DOS^{®}, MS-WINDOWS^{®}, OS/2^{®}, UNIX^{®}, LINUX^{®}, or another known operating system. In other cases, the I/O controller 815 may represent or interact with a modem, a keyboard, a mouse, a touchscreen, or a similar device. In some cases, the I/O controller 815 may be implemented as part of a processor. In some cases, a user may interact with the device 805 via the I/O controller 815 or via hardware components controlled by the I/O controller 815.

The transceiver 820 may communicate bi-directionally, via one or more antennas, wired, or wireless links as described above. For example, the transceiver 820 may represent a wireless transceiver and may communicate bi-directionally with another wireless transceiver. The transceiver 820 may also include a modem to modulate the packets and provide the modulated packets to the antennas for transmission, and to demodulate packets received from the antennas.

In some cases, the wireless device may include a single antenna 825. However, in some cases the device may have more than one antenna 825, which may be capable of concurrently transmitting or receiving multiple wireless transmissions.

The memory 830 may include random-access memory (RAM) and read-only memory (ROM). The memory 830 may store computer-readable, computer-executable code 835 including instructions that, when executed, cause the processor to perform various functions described herein. In some cases, the memory 830 may contain, among other things, a basic I/O system (BIOS) which may control basic hardware or software operation such as the interaction with peripheral components or devices.

The processor 840 may include an intelligent hardware device, (e.g., a general-purpose processor, a DSP, a central processing unit (CPU), a microcontroller, an ASIC, an FPGA, a programmable logic device, a discrete gate or transistor logic component, a discrete hardware component, or any combination thereof). In some cases, the processor 840 may be configured to operate a memory array using a memory controller. In other cases, a memory controller may be integrated into the processor 840. The processor 840 may be configured to execute computer-readable instructions stored in a memory (e.g., the memory 830) to cause the device 805 to perform various functions (e.g., functions or tasks supporting dynamic DMRS configuration assumptions for a CSI reference resource for periodic CSF reporting).

The code 835 may include instructions to implement aspects of the present disclosure, including instructions to support wireless communications. The code 835 may be stored in a non-transitory computer-readable medium such as system memory or other type of memory. In some cases, the code 835 may not be directly executable by the processor 840 but may cause a computer (e.g., when compiled and executed) to perform functions described herein.

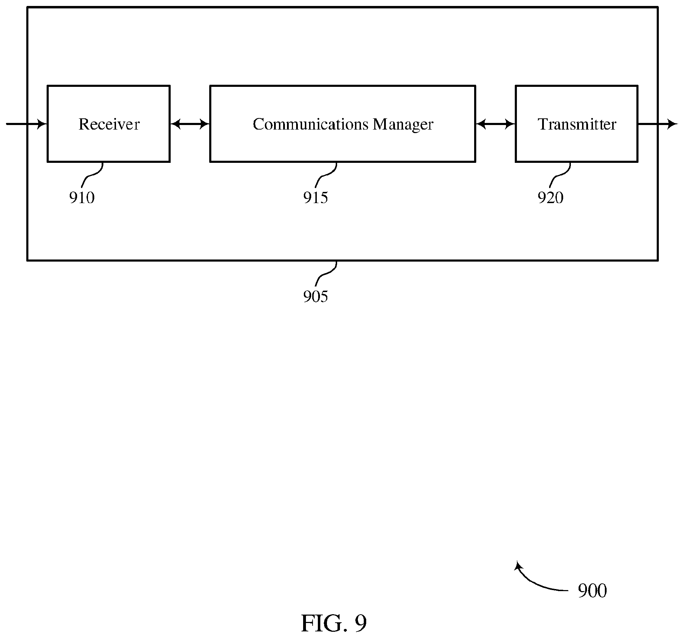

FIG. 9 shows a block diagram 900 of a device 905 that supports dynamic DMRS configuration assumptions for a CSI reference resource for periodic CSF reporting in accordance with aspects of the present disclosure. The device 905 may be an example of aspects of a base station 105 as described herein. The device 905 may include a receiver 910, a communications manager 915, and a transmitter 920. The device 905 may also include a processor. Each of these components may be in communication with one another (e.g., via one or more buses).

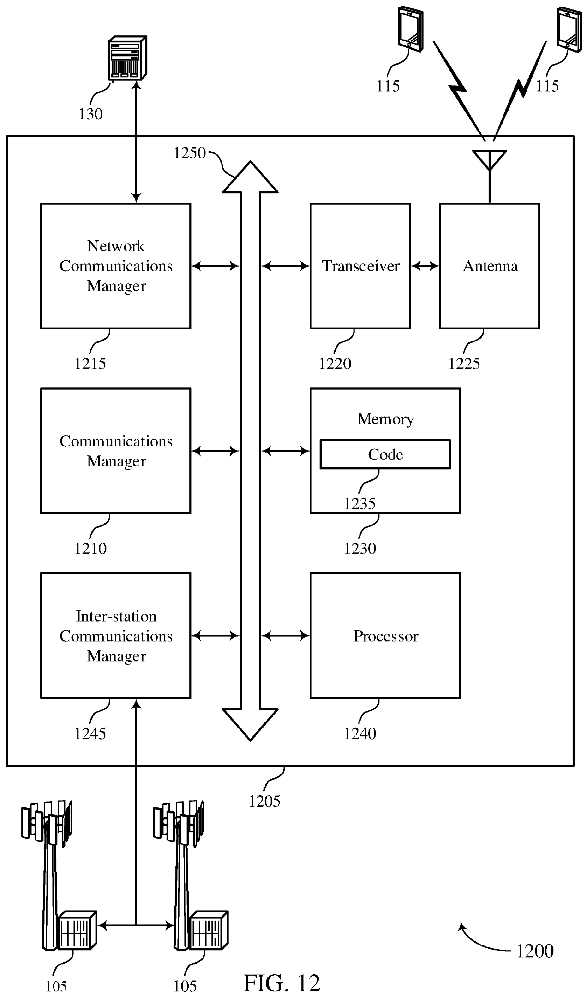

The receiver 910 may receive information such as packets, user data, or control information associated with various information channels (e.g., control channels, data channels, and information related to dynamic DMRS configuration assumptions for a CSI reference resource for periodic CSF reporting, etc.). Information may be passed on to other components of the device 905. The receiver 910 may be an example of aspects of the transceiver 1220 described with reference to FIG. 12. The receiver 910 may utilize a single antenna or a set of antennas.

The communications manager 915 may transmit a configuration for periodic CSF reporting, identify a DMRS configuration associated with a first CSI reference resource based on transmitting the configuration, receive, from a UE, an indication of one or more components of CSF in a periodic CSF report, and interpret the periodic CSF report based on the identified DMRS configuration. The communications manager 915 may be an example of aspects of the communications manager 1210 described herein.

The communications manager 915, or its sub-components, may be implemented in hardware, code (e.g., software or firmware) executed by a processor, or any combination thereof. If implemented in code executed by a processor, the functions of the communications manager 915, or its sub-components may be executed by a general-purpose processor, a DSP, an ASIC, a FPGA or other programmable logic device, discrete gate or transistor logic, discrete hardware components, or any combination thereof designed to perform the functions described in the present disclosure.

The communications manager 915, or its sub-components, may be physically located at various positions, including being distributed such that portions of functions are implemented at different physical locations by one or more physical components. In some examples, the communications manager 915, or its sub-components, may be a separate and distinct component in accordance with various aspects of the present disclosure. In some examples, the communications manager 915, or its sub-components, may be combined with one or more other hardware components, including but not limited to an input/output (I/O) component, a transceiver, a network server, another computing device, one or more other components described in the present disclosure, or a combination thereof in accordance with various aspects of the present disclosure.

The transmitter 920 may transmit signals generated by other components of the device 905. In some examples, the transmitter 920 may be collocated with a receiver 910 in a transceiver module. For example, the transmitter 920 may be an example of aspects of the transceiver 1220 described with reference to FIG. 12. The transmitter 920 may utilize a single antenna or a set of antennas.

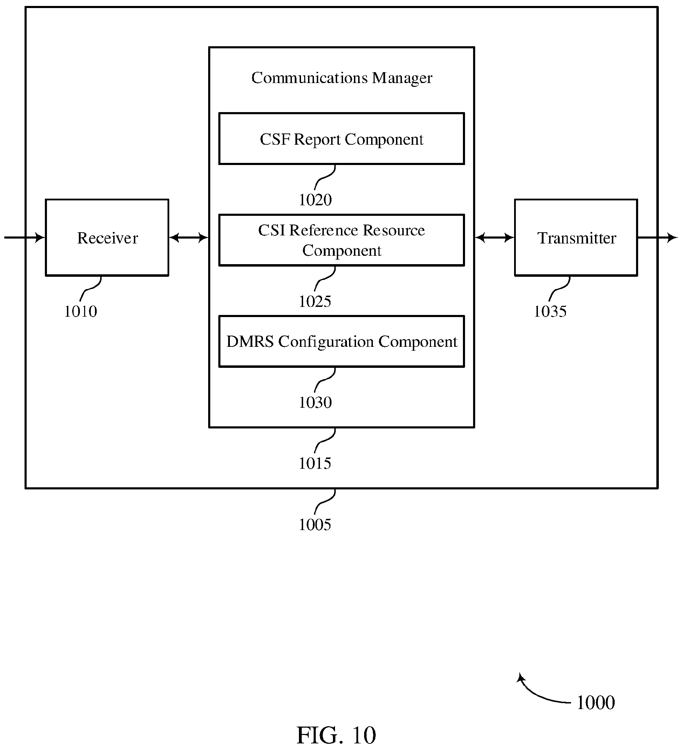

**FIG. 10** shows a block diagram 1000 of a device 1005 that supports dynamic DMRS configuration assumptions for a CSI reference resource for periodic CSF reporting in accordance with aspects of the present disclosure. The device 1005 may be an example of aspects of a device 905, or a base station 105 as described herein. The device 1005 may include a receiver 1010, a communications manager 1015, and a transmitter 1035. The device 1005 may also include a processor. Each of these components may be in communication with one another (e.g., via one or more buses).

The receiver 1010 may receive information such as packets, user data, or control information associated with various information channels (e.g., control channels, data channels, and information related to dynamic DMRS configuration assumptions for a CSI reference resource for periodic CSF reporting, etc.). Information may be passed on to other components of the device 1005. The receiver 1010 may be an example of aspects of the transceiver 1220 described with reference to FIG. 12. The receiver 1010 may utilize a single antenna or a set of antennas.

The communications manager 1015 may be an example of aspects of the communications manager 915 as described herein. The communications manager 1015 may include a CSF report component 1020, a CSI reference resource component 1025, and a DMRS configuration component 1030. The communications manager 1015 may be an example of aspects of the communications manager 1210 described herein.

The CSF report component 1020 may transmit a configuration for periodic CSF reporting. The CSI reference resource component 1025 may identify a DMRS configuration associated with a first CSI reference resource based on transmitting the configuration. The CSF report component 1020 may receive, from a UE, an indication of one or more components of CSF in a periodic CSF report. The DMRS configuration component 1030 may interpret the periodic CSF report based on the identified DMRS configuration.

The transmitter 1035 may transmit signals generated by other components of the device 1005. In some examples, the transmitter 1035 may be collocated with a receiver 1010 in a transceiver module. For example, the transmitter 1035 may be an example of aspects of the transceiver 1220 described with reference to FIG. 12. The transmitter 1035 may utilize a single antenna or a set of antennas.

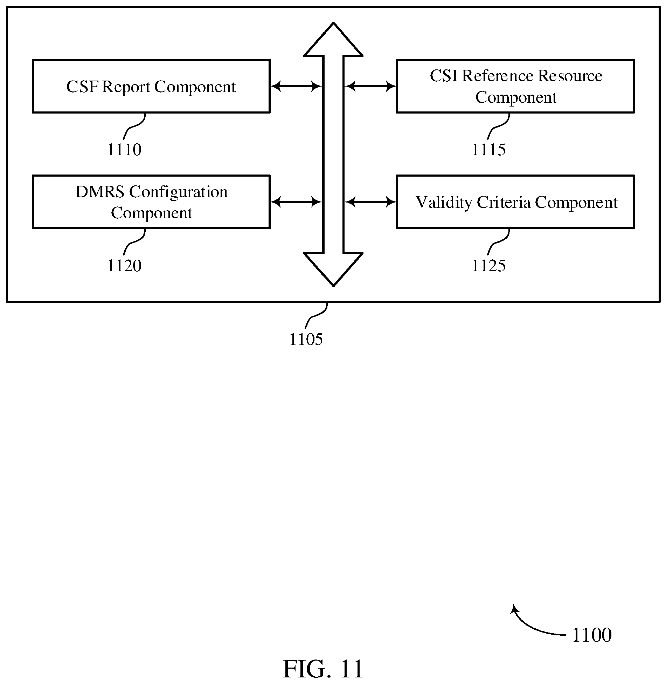

FIG. 11 shows a block diagram 1100 of a communications manager 1105 that supports dynamic DMRS configuration assumptions for a CSI reference resource for periodic CSF reporting in accordance with aspects of the present disclosure. The communications manager 1105 may be an example of aspects of a communications manager 915, a communications manager 1015, or a communications manager 1210 described herein. The communications manager 1105 may include a CSF report component 1110, a CSI reference resource component 1115, a DMRS configuration component 1120, and a validity criteria component 1125. Each of these modules may communicate, directly or indirectly, with one another (e.g., via one or more buses).

The CSF report component 1110 may transmit a configuration for periodic CSF reporting. The CSI reference resource component 1115 may identify a DMRS configuration associated with a first CSI reference resource based on transmitting the configuration. The validity criteria component 1125 may identify a slot for the first CSI reference resource based on a CSI reference resource slot offset and a first CSI reference resource slot validity criteria.

In some examples, the CSI reference resource component 1115 may identify an additional CSI reference resource slot validity criteria for the identified slot for the first CSI reference resource, where the additional CSI reference resource slot validity criteria includes a minimum threshold number of symbols for a physical downlink shared channel allocation on the identified slot for the first CSI reference resource. In some examples, the CSI reference resource component 1115 may identify a second CSI reference resource based on a CSI reference resource time condition. In some examples, the validity criteria component 1125 may determine that the additional CSI reference resource slot validity criteria is not satisfied for the second CSI reference resource. In some examples, the CSI reference resource component 1115 may identify the first CSI reference resource based at least part on the first CSI reference resource satisfying the additional CSI reference resource slot validity criteria and occurring prior to the second CSI reference resource. In some examples, the DMRS configuration component 1120 may derive the DMRS configuration based on the first CSI reference resource. In some examples, the CSI reference resource component 1115 may derive one or more parameters corresponding to the first CSI reference resource, the one or more parameters including a time density, a frequency density, a boosting value, or a combination thereof.

In some examples, the validity criteria component 1125 may determine that the additional CSI reference resource slot validity criteria is not satisfied for the second CSI reference resource. In some examples, the DMRS configuration component 1120 may derive the DMRS configuration based on a default DMRS configuration. In some cases, the default DMRS configuration includes one or more default parameters, the one or more default parameters including a time density, a frequency density, a boosting value, or a combination thereof.

In some examples, the CSI reference resource component 1115 may identify, for a CSI reference resource definition, a number of front loaded DMRS symbols from the DMRS configuration associated with a downlink allocation for the first CSI reference resource.

In some examples, the CSI reference resource component 1115 may identify, for a CSI reference resource definition, a number of additional DMRS symbols and a location of each additional DMRS symbol relative to a starting DMRS symbol from the DMRS configuration associated with a downlink allocation and after a number of front loaded DMRS symbols. In some cases, a DMRS type is based on the DMRS configuration associated with a downlink allocation and the downlink allocation includes one or more DMRS symbols. In some cases, the DMRS configuration includes one or more parameters corresponding to the first CSI reference resource, the one or more parameters including a time density, a frequency density, a boosting value, or a combination thereof.

In some examples, the CSF report component 1110 may receive, from a UE, an indication of one or more components of CSF in a periodic CSF report. In some cases, the indication of the one or more components of CSF is associated with a joint DMRS and CSF report. The DMRS configuration component 1120 may interpret the periodic CSF report based on the identified DMRS configuration.

**FIG. 12** shows a diagram of a system 1200 including a device 1205 that supports dynamic DMRS configuration assumptions for a CSI reference resource for periodic CSF reporting in accordance with aspects of the present disclosure. The device 1205 may be an example of or include the components of device 905, device 1005, or a base station 105 as described herein. The device 1205 may include components for bi-directional voice and data communications including components for transmitting and receiving communications, including a communications manager 1210, a network communications manager 1215, a transceiver 1220, an antenna 1225, memory 1230, a processor 1240, and an inter-station communications manager 1245. These components may be in electronic communication via one or more buses (e.g., bus 1250).

The communications manager 1210 may transmit a configuration for periodic CSF reporting, identify a DMRS configuration associated with a first CSI reference resource based on transmitting the configuration, receive, from a UE, an indication of one or more components of CSF in a periodic CSF report, and interpret the periodic CSF report based on the identified DMRS configuration.

The network communications manager 1215 may manage communications with the core network (e.g., via one or more wired backhaul links). For example, the network communications manager 1215 may manage the transfer of data communications for client devices, such as one or more UEs 115.

The transceiver 1220 may communicate bi-directionally, via one or more antennas, wired, or wireless links as described above. For example, the transceiver 1220 may represent a wireless transceiver and may communicate bi-directionally with another wireless transceiver. The transceiver 1220 may also include a modem to modulate the packets and provide the modulated packets to the antennas for transmission, and to demodulate packets received from the antennas.

In some cases, the wireless device may include a single antenna 1225. However, in some cases the device may have more than one antenna 1225, which may be capable of concurrently transmitting or receiving multiple wireless transmissions.

The memory 1230 may include RAM, ROM, or a combination thereof. The memory 1230 may store computer-readable code 1235 including instructions that, when executed by a processor (e.g., the processor 1240) cause the device to perform various functions described herein. In some cases, the memory 1230 may contain, among other things, a BIOS which may control basic hardware or software operation such as the interaction with peripheral components or devices.

The processor 1240 may include an intelligent hardware device, (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 1240 may be configured to operate a memory array using a memory controller. In some cases, a memory controller may be integrated into processor 1240. The processor 1240 may be configured to execute computer-readable instructions stored in a memory (e.g., the memory 1230) to cause the device 1205 to perform various functions (e.g., functions or tasks supporting dynamic DMRS configuration assumptions for a CSI reference resource for periodic CSF reporting).

The inter-station communications manager 1245 may manage communications with other base station 105, and may include a controller or scheduler for controlling communications with UEs 115 in cooperation with other base stations 105. For example, the inter-station communications manager 1245 may coordinate scheduling for transmissions to UEs 115 for various interference mitigation techniques such as beamforming or joint transmission. In some examples, the inter-station communications manager 1245 may provide an X2 interface within an LTE/LTE-A wireless communication network technology to provide communication between base stations 105.

The code 1235 may include instructions to implement aspects of the present disclosure, including instructions to support wireless communications. The code 1235 may be stored in a non-transitory computer-readable medium such as system memory or other type of memory. In some cases, the code 1235 may not be directly executable by the processor 1240 but may cause a computer (e.g., when compiled and executed) to perform functions described herein.

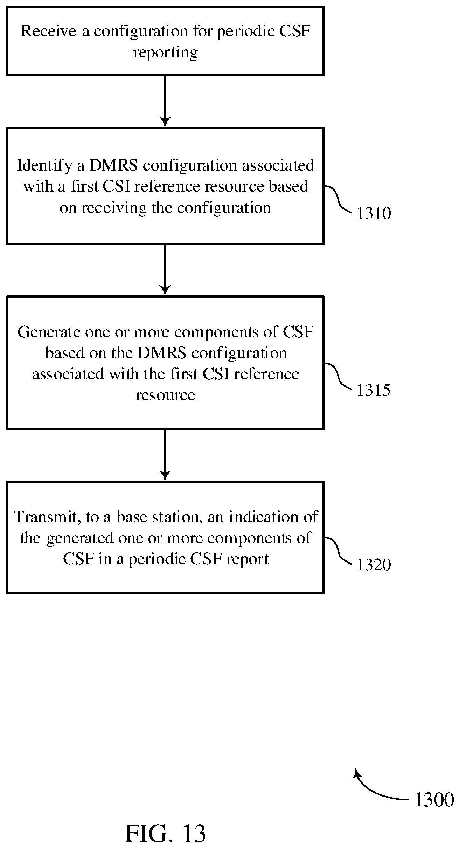

**FIG.** 13 shows a flowchart illustrating a method 1300 that supports dynamic DMRS configuration assumptions for a CSI reference resource for periodic CSF reporting in accordance with aspects of the present disclosure. The operations of method 1300 may be implemented by a UE 115 or its components as described herein. For example, the operations of method 1300 may be performed by a communications manager as described with reference to FIGs. 5 through 8. In some examples, a UE may execute a set of instructions to control the functional elements of the UE to perform the functions described below. Additionally or alternatively, a UE may perform aspects of the functions described below using special-purpose hardware.

At 1305, the UE receives a configuration for periodic CSF reporting. The operations of 1305 may be performed according to the methods described herein. In some examples, aspects of the operations of 1305 may be performed by a CSF report component as described with reference to FIGs. 5 through 8.

At 1310, the UE identifies a DMRS configuration associated with a first CSI reference resource based on receiving the configuration. The operations of 1310 may be performed according to the methods described herein. In some examples, aspects of the operations of 1310 may be performed by a CSI reference resource component as described with reference to FIGs. 5 through 8.

At 1315, the UE generates one or more components of CSF based on the DMRS configuration associated with the first CSI reference resource. The operations of 1315 may be performed according to the methods described herein. In some examples, aspects of the operations of 1315 may be performed by a DMRS configuration component as described with reference to FIGs. 5 through 8.

At 1320, the UE transmits to a base station, an indication of the generated one or more components of CSF in a periodic CSF report. The operations of 1320 may be performed according to the methods described herein. In some examples, aspects of the operations of 1320 may be performed by a CSF report component as described with reference to FIGs. 5 through 8.

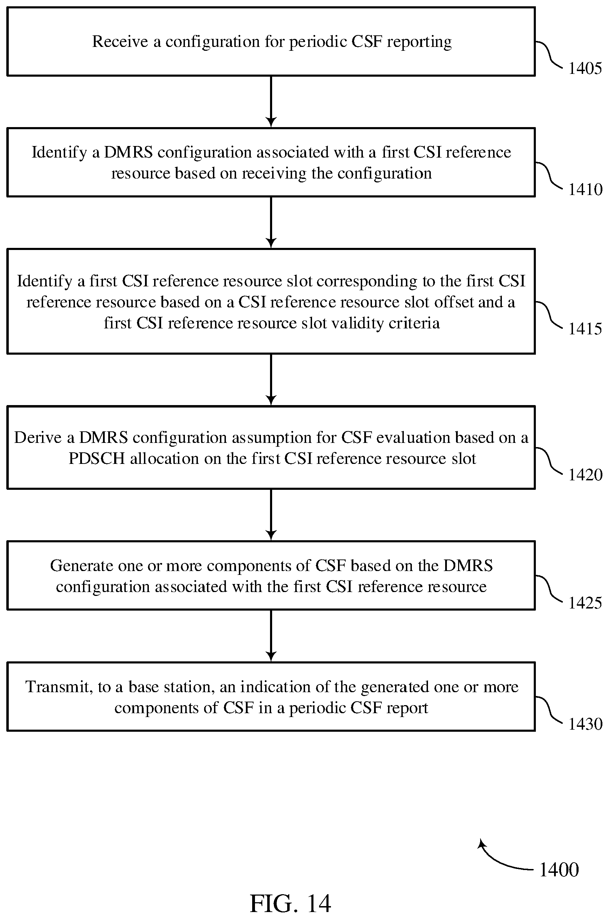

**FIG. 14** shows a flowchart illustrating a method 1400 that supports dynamic DMRS configuration assumptions for a CSI reference resource for periodic CSF reporting in accordance with aspects of the present disclosure. The operations of method 1400 may be implemented by a UE 115 or its components as described herein. For example, the operations of method 1400 may be performed by a communications manager as described with reference to FIGs. 5 through 8. In some examples, a UE may execute a set of instructions to control the functional elements of the UE to perform the functions described below. Additionally or alternatively, a UE may perform aspects of the functions described below using special-purpose hardware.

At 1405, the UE may receive a configuration for periodic CSF reporting. The operations of 1405 may be performed according to the methods described herein. In some examples, aspects of the operations of 1405 may be performed by a CSF report component as described with reference to FIGs. 5 through 8.

At 1410, the UE may identify a DMRS configuration associated with a first CSI reference resource based on receiving the configuration. The operations of 1410 may be performed according to the methods described herein. In some examples, aspects of the operations of 1410 may be performed by a CSI reference resource component as described with reference to FIGs. 5 through 8.

At 1415, the UE may identify a first CSI reference resource slot corresponding to the first CSI reference resource based on a CSI reference resource slot offset and a first CSI reference resource slot validity criteria. The operations of 1415 may be performed according to the methods described herein. In some examples, aspects of the operations of 1415 may be performed by a CSI reference resource component as described with reference to FIGs. 5 through 8.

At 1420, the UE may derive a DMRS configuration assumption for CSF evaluation based on a physical downlink shared channel allocation on the first CSI reference resource slot. The operations of 1420 may be performed according to the methods described herein. In some examples, aspects of the operations of 1420 may be performed by a DMRS configuration component as described with reference to FIGs. 5 through 8.

At 1425, the UE may generate one or more components of CSF based on the DMRS configuration associated with the first CSI reference resource. The operations of 1425 may be performed according to the methods described herein. In some examples, aspects of the operations of 1425 may be performed by a DMRS configuration component as described with reference to FIGs. 5 through 8.

At 1430, the UE may transmit, to a base station, an indication of the generated one or more components of CSF in a periodic CSF report. The operations of 1430 may be performed according to the methods described herein. In some examples, aspects of the operations of 1430 may be performed by a CSF report component as described with reference to FIGs. 5 through 8.

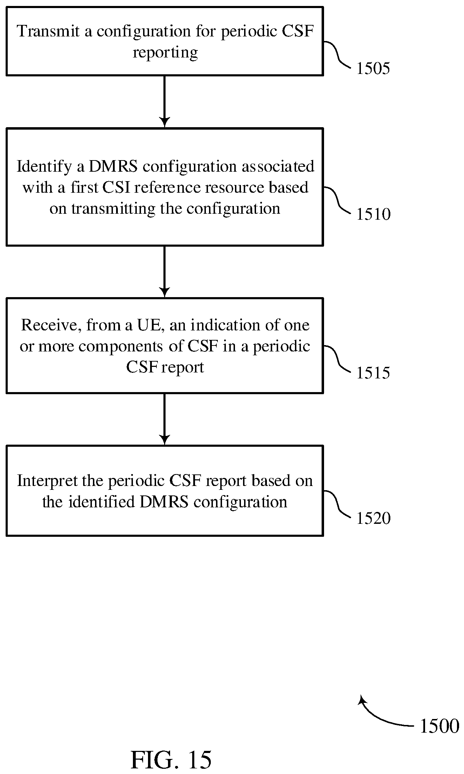

**FIG. 15** shows a flowchart illustrating a method 1500 that supports dynamic DMRS configuration assumptions for a CSI reference resource for periodic CSF reporting in accordance with aspects of the present disclosure. The operations of method 1500 may be implemented by a base station 105 or its components as described herein. For example, the operations of method 1500 may be performed by a communications manager as described with reference to FIGs. 9 through 12. In some examples, a base station may execute a set of instructions to control the functional elements of the base station to perform the functions described below. Additionally or alternatively, a base station may perform aspects of the functions described below using special-purpose hardware.

At 1505, the base station may transmit a configuration for periodic CSF reporting. The operations of 1505 may be performed according to the methods described herein. In some examples, aspects of the operations of 1505 may be performed by a CSF report component as described with reference to FIGs. 9 through 12.

At 1510, the base station may identify a DMRS configuration associated with a first CSI reference resource based on transmitting the configuration. The operations of 1510 may be performed according to the methods described herein. In some examples, aspects of the operations of 1510 may be performed by a CSI reference resource component as described with reference to FIGs. 9 through 12.

At 1515, the base station may receive, from a UE, an indication of one or more components of CSF in a periodic CSF report. The operations of 1515 may be performed according to the methods described herein. In some examples, aspects of the operations of 1515 may be performed by a CSF report component as described with reference to FIGs. 9 through 12.

At 1520, the base station may interpret the periodic CSF report based on the identified DMRS configuration. The operations of 1520 may be performed according to the methods described herein. In some examples, aspects of the operations of 1520 may be performed by a DMRS configuration component as described with reference to FIGs. 9 through 12.

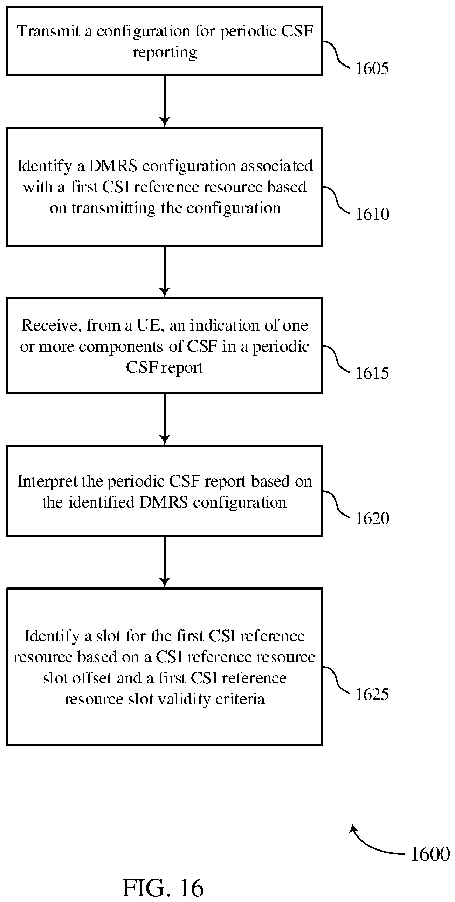

**FIG. 16** shows a flowchart illustrating a method 1600 that supports dynamic DMRS configuration assumptions for a CSI reference resource for periodic CSF reporting in accordance with aspects of the present disclosure. The operations of method 1600 may be implemented by a base station 105 or its components as described herein. For example, the operations of method 1600 may be performed by a communications manager as described with reference to FIGs. 9 through 12. In some examples, a base station may execute a set of instructions to control the functional elements of the base station to perform the functions described below. Additionally or alternatively, a base station may perform aspects of the functions described below using special-purpose hardware.

At 1605, the base station may transmit a configuration for periodic CSF reporting. The operations of 1605 may be performed according to the methods described herein. In some examples, aspects of the operations of 1605 may be performed by a CSF report component as described with reference to FIGs. 9 through 12.

At 1610, the base station may identify a DMRS configuration associated with a first CSI reference resource based on transmitting the configuration. The operations of 1610 may be performed according to the methods described herein. In some examples, aspects of the operations of 1610 may be performed by a CSI reference resource component as described with reference to FIGs. 9 through 12.

At 1615, the base station may receive, from a UE, an indication of one or more components of CSF in a periodic CSF report. The operations of 1615 may be performed according to the methods described herein. In some examples, aspects of the operations of 1615 may be performed by a CSF report component as described with reference to FIGs. 9 through 12.

At 1620, the base station may interpret the periodic CSF report based on the identified DMRS configuration. The operations of 1620 may be performed according to the methods described herein. In some examples, aspects of the operations of 1620 may be performed by a DMRS configuration component as described with reference to FIGs. 9 through 12.

At 1625, the base station may identify a slot for the first CSI reference resource based on a CSI reference resource slot offset and a first CSI reference resource slot validity criteria. The operations of 1625 may be performed according to the methods described herein. In some examples, aspects of the operations of 1625 may be performed by a validity criteria component as described with reference to FIGs. 9 through 12.

It should be noted that the methods described herein describe possible implementations, and that the operations and the steps may be rearranged or otherwise modified and that other implementations are possible. Further, aspects from two or more of the methods may be combined.

Although aspects of an LTE, LTE-A, LTE-A Pro, or NR system may be described for purposes of example, and LTE, LTE-A, LTE-A Pro, or NR terminology may be used in much of the description, the techniques described herein are applicable beyond LTE, LTE-A, LTE-A Pro, or NR networks. For example, the described techniques may be applicable to various other wireless communications systems such as Ultra Mobile Broadband (UMB), Institute of Electrical and Electronics Engineers (IEEE) 802.11 (Wi-Fi), IEEE 802.16 (WiMAX), IEEE 802.20, Flash-OFDM, as well as other systems and radio technologies not explicitly mentioned herein.

Information and signals described herein may be represented using any of a variety of different technologies and techniques. For example, data, instructions, commands, information, signals, bits, symbols, and chips that may be referenced throughout the description may be represented by voltages, currents, electromagnetic waves, magnetic fields or particles, optical fields or particles, or any combination thereof.

The various illustrative blocks and components described in connection with the disclosure herein may be implemented or performed with a general-purpose processor, a DSP, an ASIC, a CPU, an FPGA or other programmable logic device, discrete gate or transistor logic, discrete hardware components, or any combination thereof designed to perform the functions described herein. A general-purpose processor may be a microprocessor, but in the alternative, the processor may be any processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described herein may be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that may be accessed by a general-purpose or special-purpose computer. By way of example, and not limitation, non-transitory computer-readable media may include RAM, ROM, electrically erasable programmable ROM (EEPROM), flash memory, compact disk (CD) ROM or other optical disk storage, magnetic disk storage or other magnetic storage devices, or any other non-transitory medium that may be used to carry or store desired program code means in the form of instructions or data structures and that may be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of computer-readable medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (e.g., a list of items prefaced by a phrase such as "at least one of" or "one or more of') indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an example step that is described as "based on condition A" may be based on both a condition A and a condition B without departing from the scope of the present disclosure. In other words, as used herein, the phrase "based on" shall be construed in the same manner as the phrase "based at least in part on."

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label, or other subsequent reference label.

The description set forth herein, in connection with the appended drawings, describes example configurations and does not represent all the examples that may be implemented or that are within the scope of the claims. The term "example" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, known structures and devices are shown in block diagram form in order to avoid obscuring the concepts of the described examples.

## Claims

1. A method for wireless communications at a user equipment, UE, comprising:
receiving a configuration for periodic channel state feedback reporting;
identifying (1310) a demodulation reference signal configuration currently used for a first channel state information reference resource based at least in part on receiving the configuration;
generating (1315) one or more components of channel state feedback based at least in part on the demodulation reference signal configuration currently used for the first channel state information reference resource; and
transmitting (1320), to a base station, an indication of the generated one or more components of channel state feedback in a periodic channel state feedback report.

2. The method of claim 1, further comprising:
identifying (1415) a first channel state information reference resource slot corresponding to the first channel state information reference resource based at least in part on a channel state information reference resource slot offset and a first channel state information reference resource slot validity criteria; and
deriving (1420) a demodulation reference signal configuration assumption for channel state feedback evaluation based at least in part on a physical downlink shared channel allocation on the first channel state information reference resource slot.

3. The method of claim 1, further comprising:
identifying a second channel state information reference resource slot based at least in part on a channel state information reference resource slot offset and a first channel state information reference resource slot validity criteria; and
identifying an additional channel state information reference resource slot validity criteria for the second channel state information reference resource slot, wherein the additional channel state information reference resource slot validity criteria comprises a minimum threshold number of symbols for a physical downlink shared channel allocation on the second channel state information reference resource slot.

4. The method of claim 3, further comprising:
determining that the additional channel state information reference resource slot validity criteria is not satisfied for the second channel state information reference resource slot;
identifying a first channel state information reference resource slot corresponding to the first channel state information reference resource based at least part on the first channel state information reference resource slot satisfying the additional channel state information reference resource slot validity criteria, satisfying the first channel state information reference resource slot validity criteria, and occurring in a closest prior slot to the second channel state information reference resource slot; and
deriving a demodulation reference signal configuration assumption for channel state feedback evaluation based at least in part on the physical downlink shared channel allocation on the first channel state information reference resource slot.

5. The method of claim 3, further comprising:
determining that the additional channel state information reference resource slot validity criteria is not satisfied for the second channel state information reference resource slot; and
deriving a demodulation reference signal configuration assumption for channel state feedback evaluation based at least in part on a default demodulation reference signal configuration that is predefined for channel state information reference resource assumptions.

6. The method of claim 1, further comprising:
identifying, for a channel state information reference resource definition, a number of front loaded demodulation reference signal symbols from the demodulation reference signal configuration associated with a physical downlink shared channel allocation on a first channel state information reference resource slot corresponding to the first channel state information reference resource.

7. The method of claim 1, further comprising:
identifying, for a channel state information reference resource definition, a number of additional demodulation reference signal symbols and locations of all demodulation reference signal symbols relative to a first symbol of a physical downlink shared channel allocation based on the demodulation reference signal configuration associated with the physical downlink shared channel allocation on a first channel state information reference resource slot for the first channel state information reference resource and based on a predefined assumption of physical downlink shared channel allocation duration.

8. The method of claim 1, wherein a demodulation reference signal type is based on the demodulation reference signal configuration associated with a physical downlink shared channel allocation on a first channel state information reference resource slot for the first channel state information reference resource.

9. The method of claim 1, wherein the periodic channel state feedback report comprises a periodic joint channel state feedback and demodulation reference signal report.

10. A method for wireless communications at a base station, comprising:
transmitting (1505) a configuration for periodic channel state feedback reporting;
identifying (1510) a demodulation reference signal configuration currently used for a first channel state information reference resource based at least in part on transmitting the configuration;
receiving (1515), from a user equipment, UE, an indication of one or more components of channel state feedback in a periodic channel state feedback report; and
interpreting (1520) the periodic channel state feedback report based at least in part on the identified demodulation reference signal configuration.

11. The method of claim 10, further comprising:
identifying (1625) a slot for the first channel state information reference resource based at least in part on a channel state information reference resource slot offset and a first channel state information reference resource slot validity criteria.

12. An apparatus for wireless communications at a user equipment, UE, comprising:
means for receiving a configuration for periodic channel state feedback reporting;
means for identifying a demodulation reference signal configuration currently used for a first channel state information reference resource based at least in part on receiving the configuration;
means for generating one or more components of channel state feedback based at least in part on the demodulation reference signal configuration currently used for the first channel state information reference resource; and
means for transmitting, to a base station, an indication of the generated one or more components of channel state feedback in a periodic channel state feedback report.

13. An apparatus for wireless communications at a base station, comprising:
means for transmitting a configuration for periodic channel state feedback reporting;
means for identifying a demodulation reference signal configuration currently used for a first channel state information reference resource based at least in part on transmitting the configuration;
means for receiving, from a user equipment, UE, an indication of one or more components of channel state feedback in a periodic channel state feedback report; and
means for interpreting the periodic channel state feedback report based at least in part on the identified demodulation reference signal configuration.

14. A non-transitory computer-readable medium comprising instructions, which when executed by a computer, cause the computer to carry out to the steps of:
receive a configuration for periodic channel state feedback reporting;
identify a demodulation reference signal configuration currently used for a first channel state information reference resource based at least in part on receiving the configuration;
generate one or more components of channel state feedback based at least in part on the demodulation reference signal configuration currently used for the first channel state information reference resource; and
transmit, to a base station, an indication of the generated one or more components of channel state feedback in a periodic channel state feedback report.

15. A non-transitory computer-readable medium comprising instructions, which when executed by a computer, cause the computer to carry out to the steps of:
transmit a configuration for periodic channel state feedback reporting;
identify a demodulation reference signal configuration currently used for a first channel state information reference resource based at least in part on transmitting the configuration;
receive, from a user equipment, UE, an indication of one or more components of channel state feedback in a periodic channel state feedback report; and
interpret the periodic channel state feedback report based at least in part on the identified demodulation reference signal configuration.

## Patentansprüche

1. Ein Verfahren für drahtlose Kommunikationen an einem Benutzergerät (User Equipment bzw. UE), aufweisend:
Empfangen einer Konfiguration für ein periodisches Kanalzustandsrückmeldung-Berichten,
Identifizieren (1310) einer Demodulationsreferenzsignal-Konfiguration, die aktuell für eine erste Kanalzustandsinformationen-Referenzressource verwendet wird, basierend wenigstens teilweise auf dem Empfangen der Konfiguration,
Generieren (1315) einer oder mehrerer Komponenten einer Kanalzustandsrückmeldung basierend wenigstens teilweise auf der Demodulationsreferenzsignal-Konfiguration, die aktuell für die erste Kanalzustandsinformationen-Referenzressource verwendet wird, und
Senden (1320), an eine Basisstation, einer Angabe der generierten einen oder mehreren Komponenten einer Kanalzustandsrückmeldung in einem periodischen Kanalzustandsrückmeldung-Bericht.

2. Verfahren nach Anspruch 1, das weiterhin aufweist:
Identifizieren (1415) eines ersten Kanalzustandsinformationen-Referenzressourcenschlitzes in Entsprechung zu der ersten Kanalzustandsinformationen-Referenzressource basierend wenigstens teilweise auf einem Kanalzustandsinformationen-Referenzressourcenschlitzversatz und einem ersten Kanalzustandsinformationen-Referenzressourcenschlitz-Gültigkeitskriterium, und
Ableiten (1420) einer Demodulationsreferenzsignal-Konfigurationsannahme für eine Kanalzustand-Rückmeldungsbewertung basierend wenigstens teilweise auf einer Gemeinsamer-physikalischer-Downlink-Kanal-Zuweisung auf dem ersten Kanalzustandsinformationen-Referenzressourcenschlitz.

3. Verfahren nach Anspruch 1, das weiterhin aufweist:
Identifizieren eines zweiten Kanalzustandsinformationen-Referenzressourcenschlitzes basierend wenigstens teilweise auf einem Kanalzustandsinformationen-Referenzressourcenschlitzversatz und einem ersten Kanalzustandsinformationen-Referenzressourcenschlitz-Gültigkeitskriterium, und
Identifizieren eines zusätzlichen Kanalzustandsinformationen-Referenzressourcenschlitz-Gültigkeitskriteriums für den zweiten Kanalzustandsinformationen-Referenzressourcenschlitz, wobei das zusätzliche Kanalzustandsinformationen-Referenzressourcenschlitz-Gültigkeitskriterium eine minimale Schwellenanzahl von Symbolen für eine Gemeinsamer-physikalischer-Downlink-Kanal-Zuweisung auf dem zweiten Kanalzustandsinformationen-Referenzressourcenschlitz aufweist.

4. Verfahren nach Anspruch 3, das weiterhin aufweist:
Bestimmen, dass das zusätzliche Kanalzustandsinformationen-Referenzressourcenschlitz-Gültigkeitskriterium für den zweiten Kanalzustandsinformationen-Referenzressourcenschlitz nicht erfüllt wird,
Identifizieren eines ersten Kanalzustandsinformationen-Referenzressourcenschlitzes in Entsprechung zu der ersten Kanalzustandsinformationen-Referenzressource basierend wenigstens teilweise darauf, dass der erste Kanalzustandsinformationen-Referenzressourcenschlitz das zusätzliche Kanalzustandsinformationen-Referenzressourcenschlitz-Gültigkeitskriterium erfüllt, das erste Kanalzustandsinformationen-Referenzressourcenschlitz-Gültigkeitskriterium erfüllt und in einem vorausgehenden Schlitz, der dem zweiten Kanalzustandsinformationen-Referenzressourcenschlitz am nächsten ist, auftritt, und
Ableiten einer Demodulationsreferenzsignal-Konfigurationsannahme für eine Kanalzustand-Rückmeldungsbewertung basierend wenigstens teilweise auf der Gemeinsamer-physikalischer-Downlink-Kanal-Zuweisung auf dem ersten Kanalzustandsinformationen-Referenzressourcenschlitz.

5. Verfahren nach Anspruch 3, das weiterhin aufweist:
Bestimmen, dass das zusätzliche Kanalzustandsinformationen-Referenzressourcenschlitz-Gültigkeitskriterium für den zweiten Kanalzustandsinformationen-Referenzressourcenschlitz nicht erfüllt wird, und
Ableiten einer Demodulationsreferenzsignal-Konfigurationsannahme für eine Kanalzustand-Rückmeldungsbewertung basierend wenigstens teilweise auf einer Standard-Demodulationsreferenzsignal-Konfiguration, die für Kanalzustandsinformationen-Referenzressourcenannahmen vordefiniert ist.

6. Verfahren nach Anspruch 1, das weiterhin aufweist:
Identifizieren, für eine Kanalzustandsinformationen-Referenzressourcendefinition, einer Anzahl von von vorne geladenen Demodulationsreferenzsignal-Symbolen von der Demodulationsreferenzsignal-Konfiguration, die mit einer Gemeinsamer-physikalischer-Downlink-Kanal-Zuweisung auf einem ersten Kanalzustandsinformationen-Referenzressourcenschlitz in Entsprechung zu der ersten Kanalzustandsinformationen-Referenzressource assoziiert ist.

7. Verfahren nach Anspruch 1, das weiterhin aufweist:
Identifizieren, für eine Kanalzustandsinformationen-Referenzressourcendefinition, einer Anzahl von zusätzlichen Demodulationsreferenzsignal-Symbolen und von Positionen aller Demodulationsreferenzsignal-Symbole relativ zu einem ersten Symbol einer Gemeinsamer-physikalischer-Downlink-Kanal-Zuweisung basierend auf der Demodulationsreferenzsignal-Konfiguration, die mit der Gemeinsamer-physikalischer-Downlink-Kanal-Zuweisung auf einem ersten Kanalzustandsinformationen-Referenzressourcenschlitz für die erste Kanalzustandsinformationen-Referenzressource assoziiert ist, und basierend auf einer vordefinierten Annahme einer Gemeinsamer-physikalischer-Downlink-Kanal-Zuweisungsdauer.

8. Verfahren nach Anspruch 1, wobei ein Demodulationsreferenzsignal-Typ auf der Demodulationsreferenzsignal-Konfiguration, die mit einer Gemeinsamer-physikalischer-Downlink-Kanal-Zuweisung auf einem ersten Kanalzustandsinformationen-Referenzsignalschlitz für die erste Kanalzustandsinformationen-Referenzressource assoziiert ist, basiert.

9. Verfahren nach Anspruch 1, wobei der periodische Kanalzustandsrückmeldung-Bericht eine periodische, gemeinsame KanalZustandsrückmeldung und einen Demodulationsreferenzsignal-Bericht aufweist.

10. Ein Verfahren für drahtlose Kommunikationen an einer Basisstation, aufweisend:
Senden (1505) einer Konfiguration für ein periodisches Kanalzustandsrückmeldung-Berichten,
Identifizieren (1510) einer Demodulationsreferenzsignal-Konfiguration, die aktuell für eine erste Kanalzustandsinformationen-Referenzressource verwendet wird, basierend wenigstens teilweise auf dem Senden der Konfiguration,
Empfangen (1515), von einem Benutzergerät (User Equipment bzw. UE), einer Angabe einer oder mehrerer Komponenten einer Kanalzustandsrückmeldung in einem periodischen Kanalzustandsrückmeldung-Bericht, und
Interpretieren (1520) des periodischen Kanalzustandsrückmeldung-Berichts basierend wenigstens teilweise auf der identifizierten Demodulationsreferenzsignal-Konfiguration.

11. Verfahren nach Anspruch 10, das weiterhin aufweist:
Identifizieren (1625) eines Schlitzes für die erste Kanalzustandsinformationen-Referenzressource basierend wenigstens teilweise auf einem Kanalzustandsinformationen-Referenzressourcenschlitzversatz und einem ersten Kanalzustandsinformationen-Referenzressourcenschlitz-Gültigkeitskriterium.

12. Eine Vorrichtung für drahtlose Kommunikationen an einem Benutzergerät (User Equipment bzw. UE), aufweisend:
Mittel zum Empfangen einer Konfiguration für ein periodisches Kanalzustandsrückmeldung-Berichten,
Mittel zum Identifizieren einer Demodulationsreferenzsignal-Konfiguration, die aktuell für eine erste Kanalzustandsinformationen-Referenzressource verwendet wird, basierend wenigstens teilweise auf dem Empfangen der Konfiguration,
Mittel zum Generieren einer oder mehrerer Komponenten einer Kanalzustandsrückmeldung basierend wenigstens teilweise auf der Demodulationsreferenzsignal-Konfiguration, die aktuell für die erste Kanalzustandsinformationen-Referenzressource verwendet wird, und
Mittel zum Senden, an eine Basisstation, einer Angabe der generierten einen oder mehreren Komponenten einer Kanalzustandsrückmeldung in einem periodischen Kanalzustandsrückmeldung-Bericht.

13. Eine Vorrichtung für drahtlose Kommunikationen an einer Basisstation, aufweisend:
Mittel zum Senden einer Konfiguration für ein periodisches Kanalzustandsrückmeldung-Berichten,
Mittel zum Identifizieren einer Demodulationsreferenzsignal-Konfiguration, die aktuell für eine erste Kanalzustandsinformationen-Referenzressource verwendet wird, basierend wenigstens teilweise auf dem Senden der Konfiguration,
Mittel zum Empfangen, von einem Benutzergerät (User Equipment bzw. UE), einer Angabe einer oder mehrerer Komponenten einer Kanalzustandsrückmeldung in einem periodischen Kanalzustandsrückmeldung-Bericht, und
Mittel zum Interpretieren des periodischen Kanalzustandsrückmeldung-Berichts basierend wenigstens teilweise auf der identifizierten Demodulationsreferenzsignal-Konfiguration.

14. Ein nicht-transitorisches, computerlesbares Medium, das Befehle aufweist, die bei einer Ausführung durch einen Computer den Computer zum Ausführen der folgenden Schritte veranlassen:
Empfangen einer Konfiguration für ein periodisches Kanalzustandsrückmeldung-Berichten,
Identifizieren einer Demodulationsreferenzsignal-Konfiguration, die aktuell für eine erste Kanalzustandsinformationen-Referenzressource verwendet wird, basierend wenigstens teilweise auf dem Empfangen der Konfiguration,
Generieren einer oder mehrerer Komponenten einer Kanalzustandsrückmeldung basierend wenigstens teilweise auf der Demodulationsreferenzsignal-Konfiguration, die aktuell für die erste Kanalzustandsinformationen-Referenzressource verwendet wird, und
Senden, an eine Basisstation, einer Angabe der generierten einen oder mehreren Komponenten einer Kanalzustandsrückmeldung in einem periodischen Kanalzustandsrückmeldung-Bericht.

15. Ein nicht-transitorisches, computerlesbares Medium, das Befehle aufweist, die bei einer Ausführung durch einen Computer den Computer zum Ausführen der folgenden Schritte veranlassen:
Senden einer Konfiguration für ein periodisches Kanalzustandsrückmeldung-Berichten,
Identifizieren einer Demodulationsreferenzsignal-Konfiguration, die aktuell für eine erste Kanalzustandsinformationen-Referenzressource verwendet wird, basierend wenigstens teilweise auf dem Senden der Konfiguration,
Empfangen, von einem Benutzergerät (User Equipment bzw. UE), einer Angabe einer oder mehrerer Komponenten einer Kanalzustandsrückmeldung in einem periodischen Kanalzustandsrückmeldung-Bericht, und
Interpretieren des periodischen Kanalzustandsrückmeldung-Berichts basierend wenigstens teilweise auf der identifizierten Demodulationsreferenzsignal-Konfiguration.

## Revendications

1. Procédé de communications sans fil à un équipement utilisateur, UE, comprenant:
recevoir une configuration de rapport périodique de rétroaction d'état de canal ;
identifier (1310) une configuration de signal de référence de démodulation actuellement utilisée pour une première ressource de référence d'informations d'état de canal sur la base, au moins en partie, de la réception de la configuration ;
générer (1315) un ou plusieurs composants de rétroaction d'état de canal sur la base, au moins en partie, de la configuration de signal de référence de démodulation actuellement utilisée pour la première ressource de référence d'informations d'état de canal ; et
transmettre (1320), à une station de base, une indication du ou des composants générés de rétroaction d'état de canal dans un rapport périodique de rétroaction d'état de canal.

2. Procédé selon la revendication 1, comprenant en outre :
identifier (1415) un intervalle de ressource de référence d'informations d'état de canal correspondant à la première ressource de référence d'informations d'état de canal sur la base, au moins en partie, d'un décalage d'intervalle de ressource de référence d'informations d'état de canal et d'un critère de validité d'intervalle de ressource de référence d'informations d'état de canal ; et -
dériver (1420) une hypothèse de configuration de signal de référence de démodulation pour l'évaluation de la rétroaction d'état de canal sur la base, au moins en partie, d'une attribution de canal partagé de liaison descendante physique sur le premier intervalle de ressource de référence d'informations d'état de canal.

3. Procédé selon la revendication 1, comprenant en outre :
identifier un second intervalle de ressource de référence d'informations d'état de canal sur la base, au moins en partie, d'un décalage d'intervalle de ressource de référence d'informations d'état de canal et d'un critère de validité d'intervalle de ressource de référence d'informations d'état de canal ; et
identifier un critère de validité supplémentaire d'intervalle de ressource de référence d'informations d'état de canal pour le second intervalle de ressource de référence d'informations d'état de canal, dans lequel critère de validité supplémentaire d'intervalle de ressource de référence d'informations d'état de canal comprend un nombre seuil minimal de symboles pour une attribution de canal partagé de liaison descendante physique sur le second intervalle de ressource de référence d'informations d'état de canal.

4. Procédé selon la revendication 3, comprenant en outre :
déterminer que le critère de validité supplémentaire d'intervalle de ressource de référence d'informations d'état de canal n'est pas satisfait pour le second intervalle de ressource de référence d'informations d'état de canal ;
identifier un premier intervalle de ressource de référence d'informations d'état de canal correspondant à la première ressource de référence d'informations d'état de canal sur la base, au moins en partie, du fait que le premier intervalle de ressource de référence d'informations d'état de canal satisfait le critère de validité supplémentaire d'intervalle de ressource de référence d'informations d'état de canal, satisfait le critère de validité d'intervalle de ressource de référence d'informations d'état de canal, et se produit dans l'intervalle antérieur le plus proche du second intervalle de ressource de référence d'informations d'état de canal ; et
dériver une hypothèse de configuration de signal de référence de démodulation pour l'évaluation de la rétroaction d'état de canal sur la base, au moins en partie, de l'attribution de canal partagé de liaison descendante physique sur le premier intervalle de ressource de référence d'informations d'état de canal.

5. Procédé selon la revendication 3, comprenant en outre :
déterminer que le critère de validité supplémentaire d'intervalle de ressource de référence d'informations d'état de canal n'est pas satisfait pour le second intervalle de ressource de référence d'informations d'état de canal ; et
dériver une hypothèse de configuration de signal de référence de démodulation pour l'évaluation de la rétroaction d'état de canal sur la base, au moins en partie, d'une configuration de signal de référence de démodulation par défaut qui est prédéfinie pour les hypothèses de ressource de référence d'informations d'état de canal.

6. Procédé selon la revendication 1, comprenant en outre :
identifier, pour une définition de ressource de référence d'informations d'état de canal, un nombre de symboles de signal de référence de démodulation placés en tête à partir de la configuration de signal de référence de démodulation associée à une attribution de canal partagé de liaison descendante physique sur un premier intervalle de ressource de référence d'informations d'état de canal correspondant à la première ressource de référence d'informations d'état de canal.

7. Procédé selon la revendication 1, comprenant en outre :
identifier, pour une définition de ressource de référence d'informations d'état de canal, un nombre de symboles supplémentaires de signal de référence de démodulation et des emplacements de tous les symboles de signal de référence de démodulation par rapport à un premier symbole d'une attribution de canal partagé de liaison descendante physique sur la base de la configuration de signal de référence de démodulation associée à l'attribution de canal partagé de liaison descendante physique sur un premier intervalle de ressource de référence d'informations d'état de canal pour la première ressource de référence d'informations d'état de canal et sur la base d'une hypothèse prédéfinie de durée d'attribution de canal partagé de liaison descendante physique.

8. Procédé selon la revendication 1, dans lequel un type de signal de référence de démodulation est basé sur la configuration de signal de référence de démodulation associée à une attribution de canal partagé de liaison descendante physique sur un premier intervalle de ressource de référence d'informations d'état de canal pour la première ressource de référence d'informations d'état de canal.

9. Procédé selon la revendication 1, dans lequel le rapport périodique de rétroaction d'état de canal comprend un rapport périodique conjoint de rétroaction d'état de canal et de signal de référence de démodulation.

10. Procédé de communications sans fil à une station de base, comprenant :
transmettre (1505) une configuration de rapport périodique de rétroaction d'état de canal ;
identifier (1510) une configuration de signal de référence de démodulation actuellement utilisée pour une première ressource de référence d'informations d'état de canal sur la base, au moins en partie, de la transmission de la configuration ;
recevoir (1515), d'un équipement utilisateur, UE, une indication d'un ou plusieurs composants de rétroaction d'état de canal dans un rapport périodique de rétroaction d'état de canal ; et
interpréter (1520) le rapport périodique de rétroaction d'état de canal sur la base, au moins en partie, de la configuration de signal de référence de démodulation identifiée.

11. Procédé selon la revendication 10, comprenant en outre :
identifier (1625) un intervalle pour la première ressource de référence d'informations d'état de canal sur la base, au moins en partie, d'un décalage d'intervalle de ressource de référence d'informations d'état de canal et d'un critère de validité d'intervalle de ressource de référence d'informations d'état de canal.

12. Dispositif de communications sans fil à un équipement utilisateur, UE, comprenant:
des moyens de réception d'une configuration de rapport périodique de rétroaction d'état de canal ;
des moyens d'identification d'une configuration de signal de référence de démodulation actuellement utilisée pour une première ressource de référence d'informations d'état de canal sur la base, au moins en partie, de la réception de la configuration ;
des moyens de génération d'un ou plusieurs composants de rétroaction d'état de canal sur la base, au moins en partie, de la configuration de signal de référence de démodulation actuellement utilisée pour la première ressource de référence d'informations d'état de canal ; et
des moyens de transmission, à une station de base, d'une indication du ou des composants générés de rétroaction d'état de canal dans un rapport périodique de rétroaction d'état de canal.

13. Dispositif de communications sans fil à une station de base, comprenant :
des moyens de transmission d'une configuration de rapport périodique de rétroaction d'état de canal ;
des moyens d'identification d'une configuration de signal de référence de démodulation actuellement utilisée pour une première ressource de référence d'informations d'état de canal sur la base, au moins en partie, de la transmission de la configuration ;
des moyens de réception, d'un équipement utilisateur, UE, d'une indication d'un ou plusieurs composants de rétroaction d'état de canal dans un rapport périodique de rétroaction d'état de canal ; et
des moyens d'interprétation du rapport périodique de rétroaction d'état de canal sur la base, au moins en partie, de la configuration de signal de référence de démodulation identifiée.

14. Support non transitoire lisible par ordinateur comprenant des instructions, lesquelles, lorsqu'elles sont exécutées par un ordinateur, amènent l'ordinateur à effectuer les étapes consistant à :
recevoir une configuration de rapport périodique de rétroaction d'état de canal ;
identifier une configuration de signal de référence de démodulation actuellement utilisée pour une première ressource de référence d'informations d'état de canal sur la base, au moins en partie, de la réception de la configuration ;
générer un ou plusieurs composants de rétroaction d'état de canal sur la base, au moins en partie, de la configuration de signal de référence de démodulation actuellement utilisée pour la première ressource de référence d'informations d'état de canal ; et
transmettre, à une station de base, une indication du ou des composants générés de rétroaction d'état de canal dans un rapport périodique de rétroaction d'état de canal.

15. Support non transitoire lisible par ordinateur comprenant des instructions, lesquelles, lorsqu'elles sont exécutées par un ordinateur, amènent l'ordinateur à effectuer les étapes consistant à :
transmettre une configuration de rapport périodique de rétroaction d'état de canal ;
identifier une configuration de signal de référence de démodulation actuellement utilisée pour une première ressource de référence d'informations d'état de canal sur la base, au moins en partie, de la transmission de la configuration ;
recevoir, d'un équipement utilisateur, UE, une indication d'un ou plusieurs composants de rétroaction d'état de canal dans un rapport périodique de rétroaction d'état de canal ; et
interpréter le rapport périodique de rétroaction d'état de canal sur la base, au moins en partie, de la configuration de signal de référence de démodulation identifiée.
